# FASCICULE DE BREVET EUROPEEN

(11) **EP 2 898 000 B1**
(45) Date de publication et mention de la délivrance du brevet: **08.11.2017**
(21) Numéro de dépôt: 13766040.3
(22) Date de dépôt: 20.09.2013
(51) Int. Cl.: C09D 133/06, C09D 167/04, C09J 133/06, C09J 167/04, D01F 1/10, D01F 6/62, D01F 6/84, C08G 63/06, C08G 69/44, C08L 67/04, C08L 67/00, C08L 75/02, C08L 75/04, C08L 75/06, C08L 77/02, C08L 77/12

(54) **NOUVEAUX PRÉ-POLYMÈRES BIOSOURCÉS ET LEURS UTILISATIONS POUR LA PRÉPARATION DE POLYMÈRES UTILES COMME ADDITIFS DANS UNE MATRICE POLY(ACIDE LACTIQUE)**
NEUE BIOLOGOGISCH BASIERTE PREPOLYMERE UND IHRE VERWENDUNG ZUR HERSTELLUNG VON NÜZTLICHEN POLYMEREN ALS ZUSATZSTOFFE IN EINEM POLYLACTIDMATRIX
NEW BIOBASED PREPOLYMERS AND THEIR USES FOR THE PREPARATION OF USEFUL POLYMERS AS ADDITIVES IN A POLYLACTIDE MATRIX

(30) Priorité: 21.09.2012 FR 1258907
(43) Date de publication de la demande: 29.07.2015
(73) Titulaire: Institut des Corps Gras Etudes et Recherches Techniques - Iterg, 33600 Pessac (FR); Centre National de la Recherche Scientifique (C.N.R.S.), 75016 Paris (FR); Université de Bordeaux, 33000 Bordeaux (FR)
(72) Inventeur: CRAMAIL, Henri, F-33350 Sainte Terre (FR); LEBARBE, Thomas, F-33000 Bordeaux (FR); GADENNE, Benoit, Jean-Marie, F-63140 CHATEL GUYON (FR); ALFOS, Carine, F-33600 Pessac (FR)
(74) Mandataire: Lavoix
(86) Numéro de dépôt international: PCT/EP2013/069602
(87) Numéro de publication internationale: WO 2014/044809

(56) Documents cités:
- EP-A2- 0 634 433
- DE-A1- 2 065 289
- US-A- 3 293 225
- US-A- 4 340 682
- US-A- 4 535 142
- US-A- 5 334 670
- US-A1- 2004 138 359
- US-A1- 2010 093 543
- US-A1- 2010 174 046
- ROBERTSON M L ET AL: "Tough blends of polylactide and castor oil", A C S APPLIED MATERIALS AND INTERFACES, vol. 3, no. 9, 28 septembre 2011 (2011-09-28), pages 3402-3410, XP009167069, AMERICAN CHEMICAL SOCIETY, US ISSN: 1944-8244, DOI: 10.1021/AM2006367
- XU Y ET AL: "Morphology and properties of thermoplastic polyurethanes with dangling chains in ricinoleate-based soft segments", POLYMER, vol. 49, no. 19, 9 septembre 2008 (2008-09-09), pages 4248-4258, XP024524639, ELSEVIER SCIENCE PUBLISHERS B.V, GB ISSN: 0032-3861, DOI: 10.1016/J.POLYMER.2008.07.027 [extrait le 2008-07-24]
- HARRY-OKURU R E; ISBELL T A; WEISLEDER D: "Synthesis of estolide esters from cis-9-octadecenoic acid estolides", JOURNAL OF THE AMERICAN OIL CHEMISTS' SOCIETY, vol. 78, no. 3, 1 mars 2001 (2001-03-01), pages 219-222, XP001526490,
- HAYES D G; MANNAM V K; YE R; ZHAO H; ORTEGA S; MONTIEL M C: "Modification of oligo-ricinoleic acid and its derivatives with 10-undecenoic acid via lipase-catalyzed esterification", POLYMERS, vol. 4, 17 avril 2012 (2012-04-17), pages 1037-1055, XP002692670,
- REIHS K. , VOETZ M.: "A reversibly switching block copolymer surface", LANGMUIR, vol. 21, 24 septembre 2005 (2005-09-24), pages 10573-10580, XP002692671,
- OL'KHOV A A ET AL: "COMPOSITE MATERIALS BASED ON SEGMENTED POLYURETHANE AND POLYHYDROXYBUTYRATE", INTERNATIONAL POLYMER SCIENCE AND TECHNOLOGY, vol. 30, no. 11, 1 janvier 2003 (2003-01-01), pages T/58-T/61, XP001192901, RAPRA TECHNOLOGY, SHREWSBURY, GB ISSN: 0307-174X

## Description

La présente invention a pour objet de nouveaux polymères, et notamment des polyuréthanes, des polyesters et des polyamides.

La présente invention a également pour objet de nouveaux pré-polymères, ainsi que leurs procédés de préparation, et leurs utilisations pour la synthèse de polymères, tels que des polyuréthanes et des polyesters.

La présente invention a également pour objet l'utilisation des polymères synthétisés pour améliorer le renfort aux chocs et/ou aider à la nanostructuration d'une matrice de polymère, notamment de poly(acide lactique).

Le poly(acide lactique) (PLA) est un polymère qui présente des propriétés mécaniques intéressantes. Toutefois, il présente l'inconvénient de casser à des élongations très faibles.

Afin de remédier à ce problème, il a été envisagé l'incorporation de polymère souple dans une matrice de poly(acide lactique). Toutefois, il est connu de l'état de la technique que l'utilisation de polymères souples dans une matrice de poly(acide lactique) conduit à des problèmes d'incompatibilité, et notamment à une forte ségrégation de phase. De plus, les polymères souples connus de l'état de la technique sont pour la plupart issus de la pétrochimie. Parmi les polymères souples, on peut notamment citer le polybutadiène (Tg=-80°C), le poly(oxyde de propylène) (Tg=-70°C), le poly(ε-caprolactone) (Tg=-60°C).

Ainsi, il existe un besoin de disposer de nouveaux polymères souples permettant d'améliorer le renfort aux chocs d'une matrice de polymères cassants, et notamment d'une matrice de poly(acide lactique), tout en ne présentant pas les inconvénients des polymères existants susmentionnés.

Il existe également un besoin de nouveaux polymères souples n'étant pas issus de la pétrochimie.

La présente invention a pour but de fournir de nouveaux pré-polymères issus des bio-ressources.

Un but de la présente invention est également l'utilisation desdits pré-polymères pour la préparation de polyuréthanes, de polyesters et de polyamides, issus des bio-ressources.

Un autre but de la présente invention est de fournir de nouveaux polymères, tels que des polyuréthanes, des polyesters et des polyamides, issus des bio-ressources.

La présente invention a également pour but l'utilisation des pré-polymères pour la préparation d'additifs dans une matrice de polyester, polychlorure de vinyle, polyuréthane, polyamide, poly(acrylate d'alkyle), polystyrène et polyoléfines, et notamment dans une matrice de poly(acide lactique).

Un autre but de l'invention est d'utiliser les polyuréthanes dans le domaine des adhésifs, tensioactifs, films, élastomères thermoplastiques, peintures et fibres.

Un autre but de la présente invention est l'utilisation des polymères formés (polyuréthanes, polyamides ou polyesters) comme additifs dans une matrice de polyester, poly(chlorure de vinyle), polyuréthane, polyamide, poly(acrylate d'alkyle), poly(méthacrylate d'alkyle), polystyrène et polyoléfines, et notamment dans une matrice de poly(acide lactique).

La présente invention concerne l'utilisation d'un composé de formule (I) suivante : 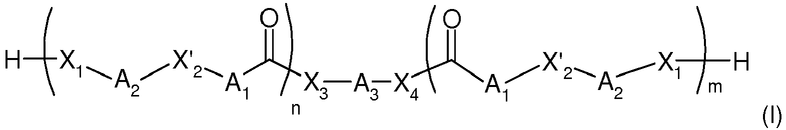 dans laquelle :
- A₁ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- A₂ représente un radical alkylène divalent, linéaire ou ramifié, comprenant de 2 à 20 atomes de carbone, de préférence de 2 à 12, et préférentiellement de 2 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- A₃ est choisi dans le groupe constitué des radicaux divalents suivants :
   o un alkylène linéaire ou ramifié, comprenant de 2 à 600 atomes de carbone, de préférence de 2 à 400, et préférentiellement de 2 à 100, ledit radical comprenant éventuellement une ou plusieurs insaturations, étant éventuellement interrompu par au moins un hétéroatome choisi parmi O, N et S, et étant éventuellement substitué par au moins un substituant -OAlk, Alk représentant un groupe alkyle comprenant de 1 à 10 atomes de carbone ; et
   o un arylène comprenant de 6 à 30 atomes de carbone, ledit radical étant éventuellement substitué par au moins un substituant -OAlk, Alk représentant un groupe alkyle comprenant de 1 à 10 atomes de carbone ;
- X₁, X₃ et X₄, identiques ou différents, représentent, indépendamment les uns des autres, -O- ou -NH- ;
- X'₂ est choisi dans le groupe constitué de : -S-, -CH₂- et une liaison ; et
- n et m représentent, indépendamment l'un de l'autre, un nombre entier compris de 1 à 1000, de préférence de 1 à 100, et préférentiellement de 1 à 50 ;
à condition que le nombre total d'atomes de carbone des radicaux A₁, A₂ et X'₂ soit supérieur ou égal à 8, de préférence supérieur ou égal à 10 ;
pour la préparation d'additifs dans une matrice de polyester, poly(chlorure de vinyle), polyuréthane, polyamide, poly(acrylate d'alkyle), poly(méthacrylate d'alkyle), polystyrène ou polyoléfine.

Il est connu de l'état de la technique les composés suivants. Robertson et al. (Tough blends of polylactide and castor oil » ACS Applied Materials and Interfaces, American Chemical Society, US, vol.3, n°9, 2011, pp.3204-3410) décrit l'utilisation de copolymères diblocs poly(acide ricinoléïque)-PLLA comme comptabilisants pour des mélanges PLLA : huile de ricin.

Harry-O'kuru et al. (« Synthesis of estolide-esters from cis-9-octadecenoic acid estolides" Journal of the American Oil Chemists' Society, vol.78, n°3, 2001, pp.219-229) décrit la synthèse d'estolides dérivés d'acide oléïque et la modification de ces estolides en esters d'estolides par utilisation d'alcools mono- et dihydroxylés. Toutefois, les composés (I) et (IA) selon l'invention diffèrent des estolides décrits dans cet article notamment par la présence obligatoire de groupes -X₁-H à chaque extrémité des composés, avec X₁ représentant -O- ou -NH-.

Hayes et al. (« Modification of oligo-ricinoleic acid and its derivatives with 10-undecenoic acid via lipase-catalysed esterification", POLYMERS, vol.4, 2012, pp.1037-1055) concerne l'incorporation d'acide undécenoïque dans trois différents dérivés d'oligomère d'acide ricinoléïque par biocatalyse selon le schéma suivant (schéma I) : 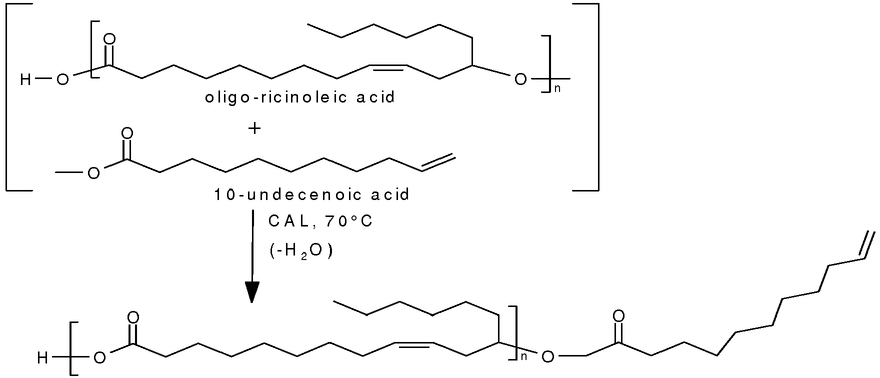 Toutefois, les composés (I) et (IA) de l'invention diffèrent des composés du schéma (I) de Hayes et al., notamment par la présence nécessaire de groupes -X₁-H à chaque extrémité des composés, avec X₁ représentant -O- ou -NH-. En outre, le schéma (II) de cet article décrit l'utilisation de PGPR ayant la formule suivante : 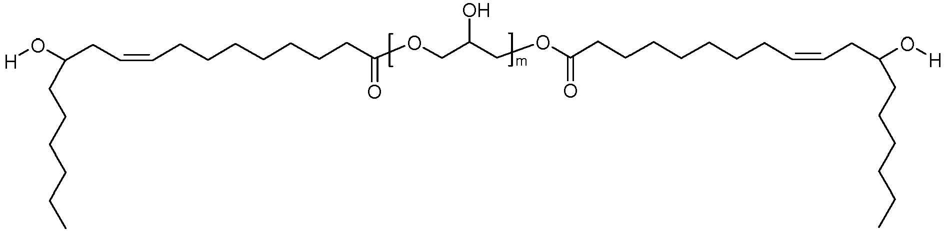 Toutefois, le groupe A₃ tel que défini selon l'invention ne peut représenter un groupe -CH₂-CH(OH)-CH₂-.

Enfin, US 5,334,670 concerne un élastomère moulé par moulage par injection qui présente des propriétés améliorées de démoulage. Ce document décrit le procédé de préparation dudit élastomère par réaction entre un polyisocyanate organique, un polyol (un polyéther polyamine ou un polyéther polyimine) et un agent de démoulage. Toutefois, les composés des exemples 1 et 3 décrits dans ce document sont exclus des composés selon l'invention.

Selon l'invention, les composés de formule (I) comprennent les motifs de répétition N et M suivants : 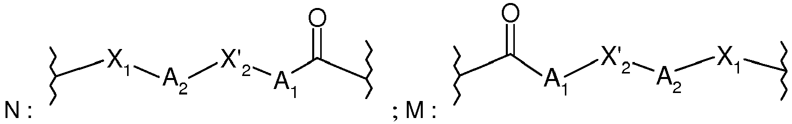 les motifs de répétition N étant répétés n fois, et les motifs de répétition M étant répétés m fois.

Selon l'invention, les motifs de répétition N peuvent être identiques ou différents selon la valeur de n. Ainsi, les groupes X₁, A₂, X'₂ et A₁ peuvent être identiques ou différents pour chaque motif de répétition.

Selon l'invention, les motifs de répétition M peuvent être identiques ou différents selon la valeur de m. Ainsi, les groupes X₁, A₂, X'₂ et A₁ peuvent être identiques ou différents pour chaque motif de répétition.

Selon un mode de réalisation, la présente invention concerne l'utilisation d'un composé de formule (I-1) suivante : 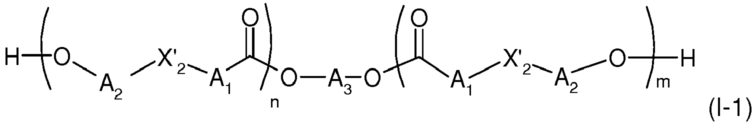 dans laquelle A₁, A₂, X'₂, X₂, A₃, n et m sont tels que définis précédemment, pour la préparation d'additifs dans une matrice de polyester, poly(chlorure de vinyle), polyuréthane, polyamide, poly(acrylate d'alkyle), poly(méthacrylate d'alkyle), polystyrène ou polyoléfine.

Selon l'invention, les composés de formule (I-1) correspondent à des composés de formule (I) dans laquelle X₁, X₃ et X₄ représentent O.

Selon un mode de réalisation, la présente invention concerne l'utilisation susmentionnée de composés de formule (I-2) suivante : 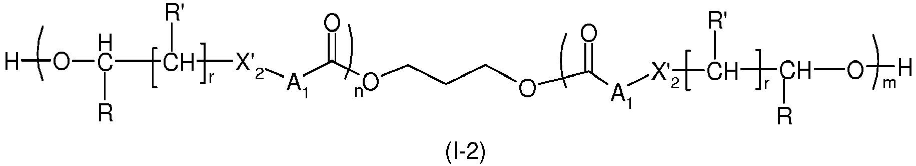 dans laquelle :
- X₁, X₂, X₃, A₁, A₃, n et m sont tels que définis précédemment ;
- R représente H ou un radical alkylène divalent, linéaire ou ramifié, comprenant de 1 à 19 atomes de carbone, de préférence de 2 à 11, préférentiellement de 4 à 9, ledit radical alkylène étant éventuellement substitué par au moins un groupe -OAlk, Alk étant tel que défini précédemment ;
- R' représente H ou un groupe -OAlk, Alk étant tel que défini précédemment ;
- r représente un nombre entier compris de 0 à 5, de préférence de 0 à 2.

Selon l'invention, les composés de formule (I-2) correspondent à des composés de formule (I) dans laquelle X₁, X₃ et X₄ représentent O, A₂ représente -CH(R)-[CH(R')]ᵣ-, et A₃ représente -(CH₂)₃-.

Selon un mode de réalisation, la présente invention concerne l'utilisation susmentionnée de composés de formule (I-3) suivante : 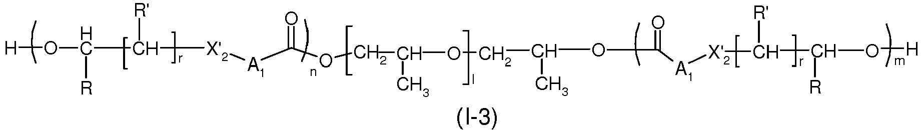 dans laquelle :
- X₁, X₂, X₃, A₁, A₃, R, R', r, n et m sont tels que définis précédemment,
- l représente un nombre entier compris de 1 à 500, de préférence de 1 à 80, et préférentiellement de 2 à 50.

Selon l'invention, les composés de formule (I-3) correspondent à des composés de formule (I) dans laquelle X₁, X₃ et X₄ représentent O, A₂ représente -CH(R)-[CH(R')]ᵣ-, et A₃ représente -[CH₂CH(CH₃)O]ₗ-CH₂-CH(CH₃)-.

Selon un mode de réalisation particulier, les composés de formules (I), (I-1) et (I-2) sont choisis dans le groupe constitué des composés répondant à l'une des formules suivantes : 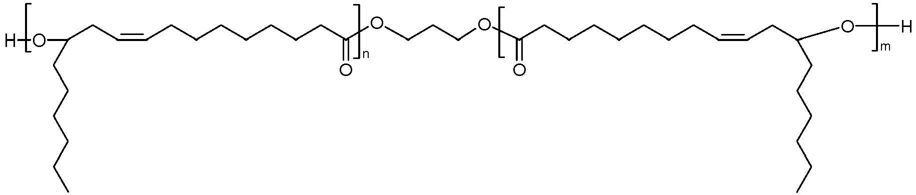 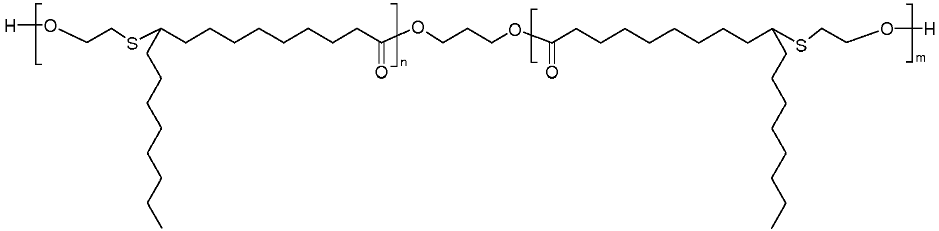 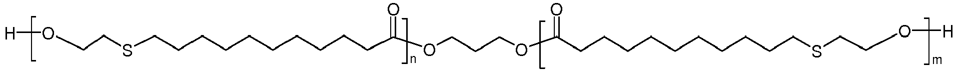 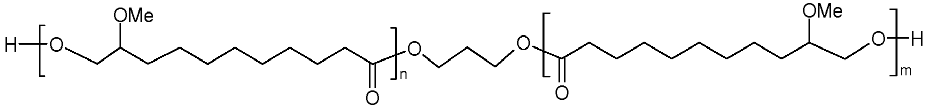 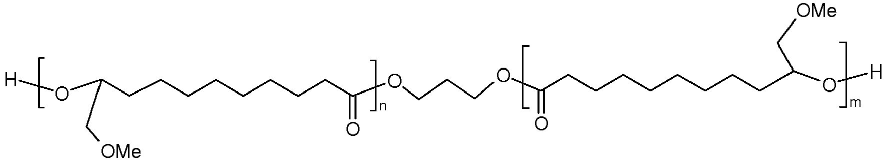 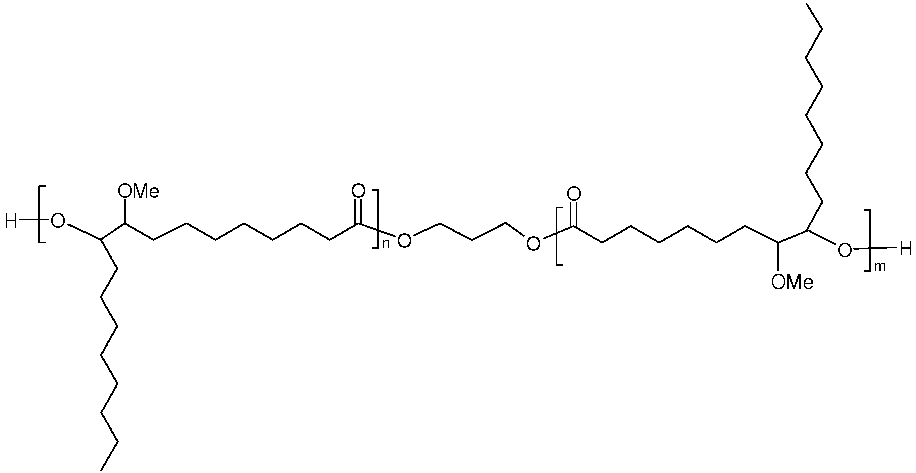 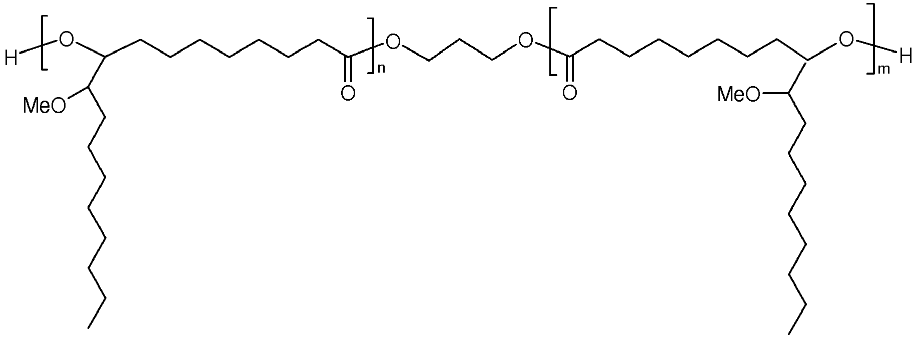 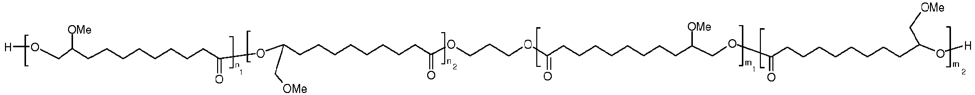 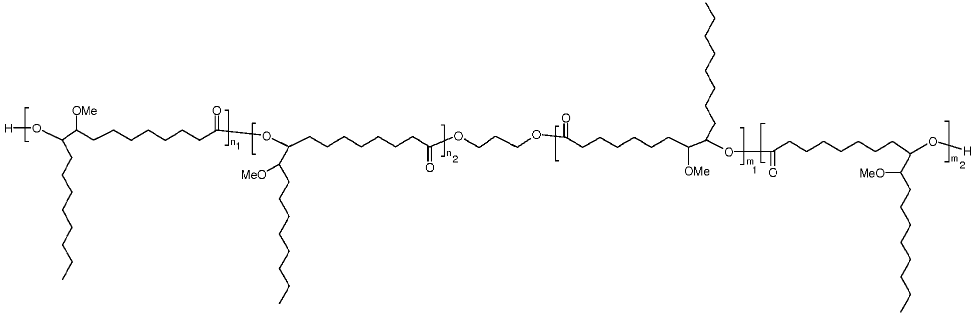 d dans lesquels n et m sont tels que définis précédemment.

Selon l'invention, les composés de formule (I) suivants : 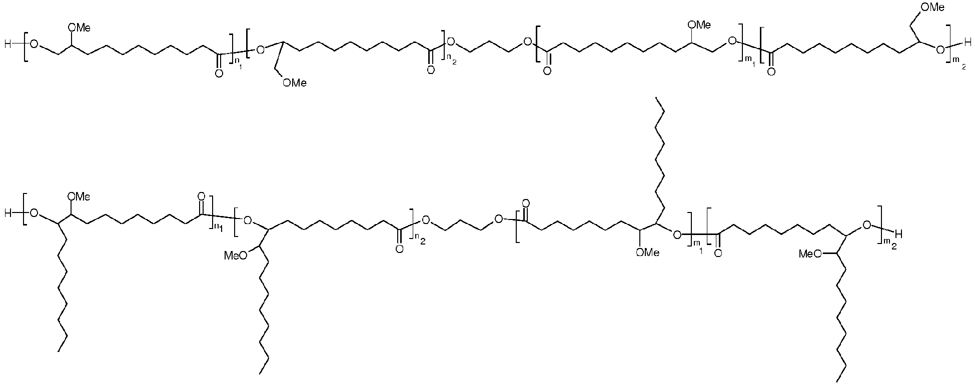 comprennent un mélange de motifs N et de motifs M. En particulier, ces composés comprennent des motifs N₁ répétés n₁ fois, des motifs N₂ répétés n₂ fois, des motifs M₁ répétés m₁ fois et des motifs M₂ répétés m₂ fois, avec n₁ + n₂ correspondant à l'entier n de la formule (I) et m₁ + m₂ correspondant à l'entier m de la formule (I). Dans ces composés la répétition des motifs est aléatoire.

De préférence, parmi les composés de formules (I), (I-1) et (I-2), on peut citer les composés suivants : 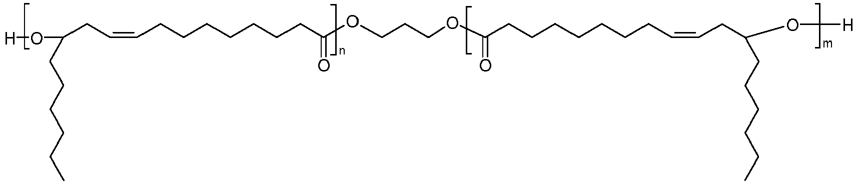 dans lesquels n et m sont tels que définis précédemment.

De préférence, n et m sont tels que la somme n + m est comprise de 10 à 50, de préférence de 20 à 40, et préférentiellement n+m représente environ 36.

Dans le cadre de l'invention, et sauf mention contraire, on entend par composés de formule (I), des macro-amorceurs, des précurseurs ou des pré-polymères pour la préparation d'additifs selon l'invention. Par exemple, les composés de formule (I) permettent de préparer les composés de formules (II), (III), (IV), (V), (VI) et (VII) qui sont des polymères.

Dans le cadre de l'invention, et sauf mention contraire, on entend par « pré-polymère » des oligomères ou polymères de faibles masses molaires, et notamment des masses molaires comprises de 200 à 20000 g/mol, et de préférence de 500 à 10000 g/mol.

Dans le cadre de l'invention, et sauf mention contraire, on entend par « additifs », les composés de formules (II), (III), (IV), (V), (VI) et (VII) qui sont ajoutés dans une matrice de polymère.

Dans le cadre de l'invention, et sauf mention contraire, on entend par « matrice de polymère », une phase dispersante majoritaire et continue d'un polymère comprenant une phase dispersée et discontinue comprenant un ou plusieurs additifs selon l'invention, et éventuellement au moins un polymère souple. On peut par exemple citer une matrice de poly(acide lactique).

Selon l'invention, une matrice de polyester peut être notamment choisie dans le groupe constituée de : matrice de poly(acide lactique), matrice de poly(ε-caprolactone), matrice de poly(butyrolactone).

Selon l'invention, une matrice de poly(acrylate d'alkyle) peut être notamment une matrice de poly(acrylate de méthyle), poly(acrylate de butyle).

En particulier, une matrice de poly(méthacrylate d'alkyle) est une matrice de poly(méthacrylate de méthyle).

Selon un mode de réalisation, la présente invention concerne l'utilisation des composés de formule (I) susmentionnée pour augmenter le renfort aux chocs d'une matrice de polyester, polychlorure de vinyle, polyuréthane, polyamide, poly(acrylate d'alkyle), poly(méthacrylate d'alkyle), polystyrène ou polyoléfines, et/ou pour aider à la nanostructuration de ladite matrice.

Dans le cadre de l'invention, et sauf mention contraire, on entend par « renfort aux chocs » une amélioration des propriétés mécaniques (meilleur allongement à la rupture, diminution du caractère cassant du matériau), notamment par dispersion d'un additif dans la matrice permettant ledit renfort au choc.

Dans le cadre de l'invention, et sauf mention contraire, on entend par « aide à la nanostructuration d'une matrice», une aide à la cristallisation et/ou une aide à la ségrégation de phase de ladite matrice selon les lois de la thermodynamique, conduisant notamment à l'obtention de phases cylindriques, lamellaires, gyroïdes.

Selon un mode de réalisation, la matrice est de type polyester, et en particulier de type poly(acide lactique) (PLA).

Selon un mode de réalisation, les additifs sont choisis dans le groupe constitué des composés de formules (II), (III), (IV), (V) et (VI) suivantes : 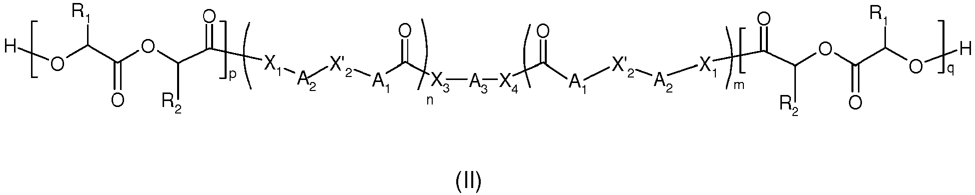 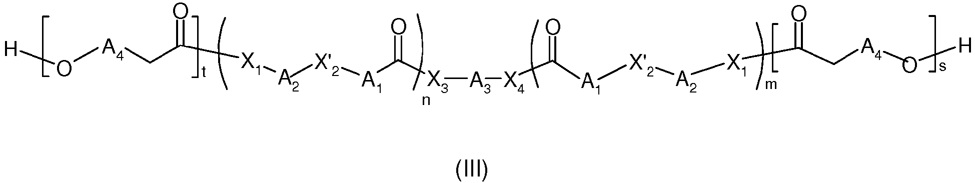 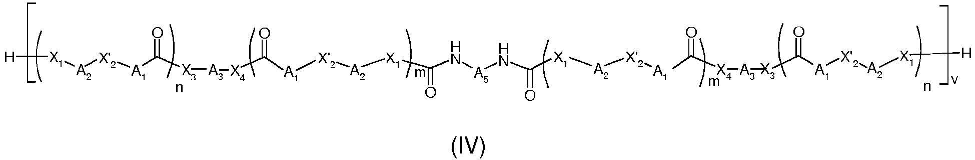 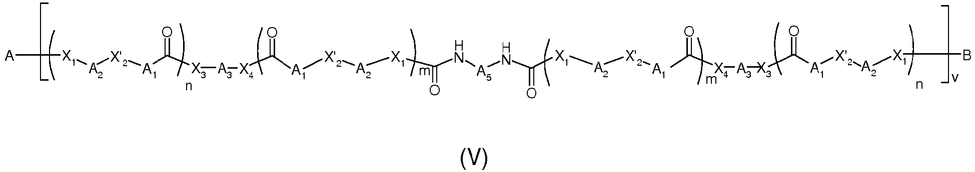 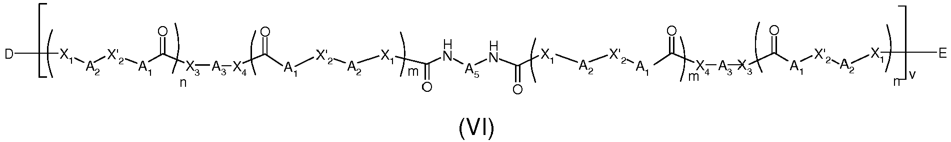 dans lesquelles :
- X₁, X'₂, X₃, X₄, A₁, A₂, A₃, n et m sont tels que définis précédemment ;
- R₁ et R₂ représentent, indépendamment l'un de l'autre, H ou un groupe alkyle, linéaire ou ramifié, comprenant de 1 à 20 atomes de carbone, de préférence de 1 à 12, et préférentiellement de 1 à 10, ledit groupe alkyle pouvant éventuellement comprendre au moins une double liaison ou une triple liaison ;
- A₄ représente un radical alkylène divalent, linéaire ou ramifié, comprenant de 1 à 20 atomes de carbone, de préférence de 2 à 6, ledit radical comprenant éventuellement au moins une insaturation ;
- A₅ est choisi dans le groupe constitué des radicaux :
   ∘ alkylène, linéaire ou ramifié, comprenant de 1 à 20 atomes de carbone, de préférence de 2 à 12, ledit radical comprenant éventuellement au moins une insaturation ;
   ∘ arylène comprenant de 6 à 20 atomes de carbone, de préférence de 6 à 12, ledit radical arylène étant éventuellement substitué ;
   ∘ cycloalkylène, comprenant de 3 à 20 atomes de carbone, de préférence de 5 à 10, ledit radical cycloalkylène étant éventuellement substitué ;
   ∘ cycloalkylène-alkylène-cycloalkylène comprenant de 6 à 30 atomes de carbone ; et
   ∘ alkylène-cycloalkylène comprenant de 4 à 15 atomes de carbone ;
- v représente un nombre entier compris de 1 à 5000, de préférence de 1 à 1000, et préférentiellement de 2 à 500 ;
- A et B représentent les radicaux suivants : 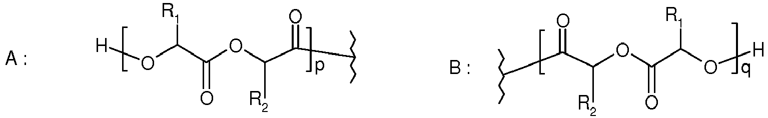
- D et E représentent les radicaux suivants : 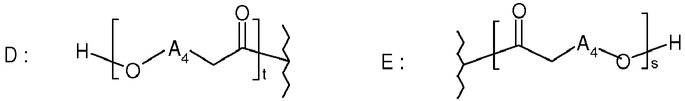
- p et q représentent, indépendamment l'un de l'autre, un nombre entier compris de 1 à 5000, de préférence de 1 à 1000, et préférentiellement de 2 à 500;
- t et s représentent, indépendamment l'un de l'autre, un nombre entier compris de 1 à 5000, de préférence de 1 à 1000, et préférentiellement de 2 à 500.

Parmi les radicaux "alkyle", on peut notamment citer, lorsqu'ils sont linéaires, les radicaux méthyle, éthyle, propyle, butyle, pentyle, hexyle, octyle, nonyle et décyle. On peut notamment citer, lorsqu'ils sont ramifiés ou substitués par un ou plusieurs radicaux alkyles, les radicaux isopropyle, tert-butyle, 2-éthylhexyle, 2-méthylbutyle, 2-méthylpentyle, 1-méthylpentyle et 3-méthylheptyle.

Dans le cadre de la présente invention, les radicaux "alkylène" représentent des radicaux (également nommés alkylidènes) dérivés des alcanes dont les deux atomes d'hydrogène terminaux ont été supprimés. Lorsque lesdits radicaux alkylènes sont linéaires, ils peuvent être représentés par la formule -(CH₂)ₖ-, k correspondant au nombre d'atomes de carbone de l'alcane dont est issu le radical alkylène.

Dans le cadre de la présente invention, les radicaux « aryles » représentent des mono- ou bi-cycles hydrocarbonés comprenant de 6 à 14 atomes de carbones, éventuellement substitué. On peut notamment citer le phényle ou l'anthracène.

Dans le cadre de la présente invention, le radical « cycloalkyle » représente tout groupement mono ou bi-cyclique, non aromatique, contenant de 4 à 10 atomes de carbones. On peut notamment citer le cyclobutyle, le cyclopentyle, le cyclohexyle, le cycloheptyle, le cyclooctyle.

Dans le cadre de la présente invention, on entend par radicaux « cycloalkylène », des radicaux dérivés des cycloalkanes dont un atome d'hydrogène terminal a été supprimé. Selon l'invention, les radicaux cycloalkylènes peuvent être substitués par un ou plusieurs groupes (C1-C6)alkyles.

Dans le cadre de l'invention, l'expression "arylène" désigne un radical (également nommé arènediyle) dérivé des arènes dont deux atomes d'hydrogène du cycle ont été supprimés. Parmi les radicaux arylènes, on peut par exemple citer les radicaux o-phénylène ou benzène-1,2-diyle.

Dans le cadre de la présente invention, les radicaux « arylalkyles » représentent un radical alkyle substitué par un groupe aryle. Les radicaux arylalkyle sont des radicaux aryl-alkyl-, le groupes aryles et alkyles étant tels que définis ci-dessus. Parmi les radicaux arylalkyles, on peut notamment citer le radical benzyle ou phénéthyle. Ces groupes arylalkyles peuvent être substitués par ou un plusieurs substituants choisis parmi amino, hydroxy, halogène, alkyle ou alcoxy.

Selon un mode de réalisation, la présente invention concerne des composés de formule (IA) suivante : 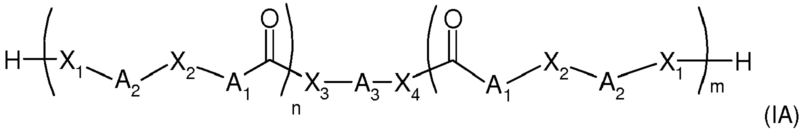 dans laquelle :
- X₁, X₃, X₄, A₁, A₂, A₃, n et m sont tels que définis précédemment ;
- X₂ représente -CH₂- ou une liaison ; et
à condition que le nombre d'atomes de carbone total des radicaux A₁, A₂ et X₂ soit supérieur ou égal à 8, de préférence supérieur ou égal à 10 ;
à l'exception des composés suivants :

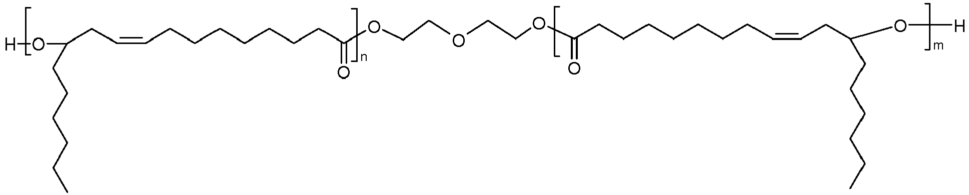

Selon un autre objet, la présente invention concerne des composés de formule (IA) suivante : 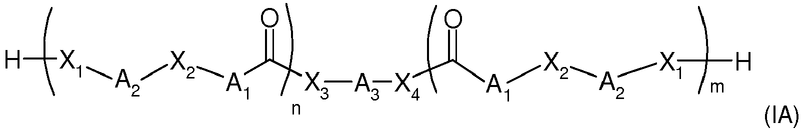 dans laquelle :
- X₁, X₃, X₄, A₁, A₂, A₃, n et m sont tels que définis précédemment ;
- X₂ représente -CH₂- ou une liaison ; et
à condition que le nombre d'atomes de carbone total des radicaux A₁, A₂ et X₂ soit supérieur ou égal à 8, de préférence supérieur ou égal à 10 ;
à l'exception des composés suivants :

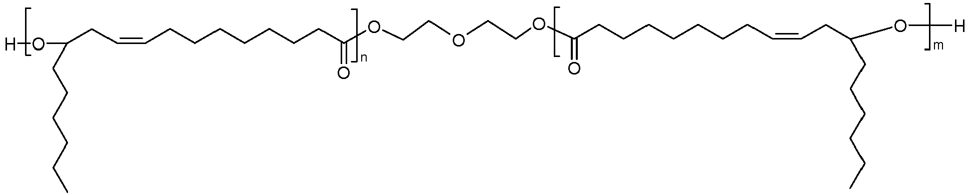

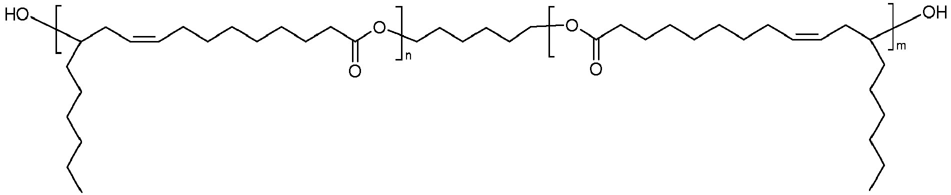

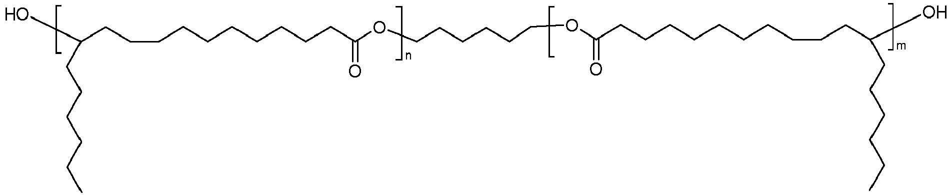

Selon l'invention, les composés de formule (IA) sont des composés de formule (I) dans laquelle X'₂ correspond au radical X₂ de la formule (IA).

Selon un mode de réalisation, A₃ ne représente pas -(CH₂CH₂OCH₂CH₂)- dans les formules (I) et (IA).

Selon un mode de réalisation, A₃ ne représente pas -C₆H₁₂- dans les formules (I) et (IA).

Selon un mode de réalisation, dans les composés de formules (I) et (IA), X₁ représente O.

Selon un mode de réalisation, dans les composés de formules (I) et (IA), X₁ représente NH.

Selon l'invention, n et m peuvent être identiques ou différents.

De préférence, n est compris de 5 à 50, et de préférence de 10 à 25.

De préférence, m est compris de 5 à 50, et de préférence de 10 à 25.

Selon un mode de réalisation, dans les composés de formules (I) et (IA), n et m sont tels que la somme n+m est comprise de 10 à 50, de préférence de 20 à 40 , et préférentiellement n+m représente environ 36.

Selon un mode de réalisation, dans les composés de formules (I) et (IA), le groupe A₁ comprend une insaturation.

Selon un mode de réalisation, dans les composés de formules (I) et (IA), le groupe A₁ n'est pas substitué.

Selon un mode de réalisation, dans les composés de formules (I) et (IA), le groupe A₁ représente un radical alkylène linéaire comprenant 9 atomes de carbone et une insaturation. De préférence, le groupe A₁ représente -CH=CH-(CH₂)₇-.

Selon un mode de réalisation, dans les composés de formules (I) et (IA), le groupe A₁ représente -(CH₂)₇-.

Selon un mode de réalisation, dans les composés de formules (I) et (IA), le groupe A₁ représente -(CH₂)₆-.

Selon un mode de réalisation, dans les composés de formules (I), le groupe A₁ représente un radical alkylène ramifié, comprenant 17 atomes de carbone. De préférence, le groupe A₁ représente -CH[(CH₂)₇CH₃]-(CH₂)₈-.

Selon un mode de réalisation, dans les composés de formule (I), le groupe A₁ représente -(CH₂)₁₀-.

Selon un mode de réalisation, dans les composés de formule (IA), le groupe X₂ représente une liaison.

Selon un autre mode de réalisation, dans les composés de formule (IA), le groupe X₂ représente -CH₂-.

Selon un mode de réalisation, dans les composés de formule (I), le groupe X'₂ représente S.

Selon un mode de réalisation, dans les composés de formule (I), le groupe X'₂ représente -CH₂-.

Selon un mode de réalisation, dans les composés de formule (IA), le groupe X'₂ représente une liaison.

Selon un mode de réalisation, dans les composés de formules (I) et (IA), le groupe A₂ représente un radical alkylène linéaire comprenant deux atomes de carbone, et éventuellement substitué par un groupe -OAlk, notamment un groupe -OMe.

De préférence, le groupe A₂ représente -CH₂CH(OMe)- ou -CH₂CH₂-.

Selon un autre mode de réalisation, dans les composés de formules (I) et (IA), le groupe A₂ représente un radical alkylène ramifié comprenant de 2 à 10 atomes de carbone, éventuellement substitué par un groupe -OAlk, notamment un groupe -OMe. De préférence, le groupe A₂ représente -CH[(CH₂)₅CH₃]-, -CH[(CH₂)₇CH₃]-CH(OMe)-, -CH(CH₂OMe)- ou -CH[CH(OMe)-(CH₂)₇-CH₃]-.

Selon un autre mode de réalisation, dans les composés de formules (I) et (IA), le groupe A₃ représente un radical alkylène linéaire comprenant de 2 à 10 atomes de carbone, de préférence de 2 à 5 atomes de carbone. De préférence, le groupe A₃ représente -(CH₂)₃-,

Selon un mode de réalisation, A₃ représente un radical alkylène ramifié comprenant de 2 à 100 atomes de carbone, de préférence de 2 à 50 atomes de carbone, et préférentiellement 36 atomes de carbone. En particulier, le groupe A₃ représente le groupe suivant :

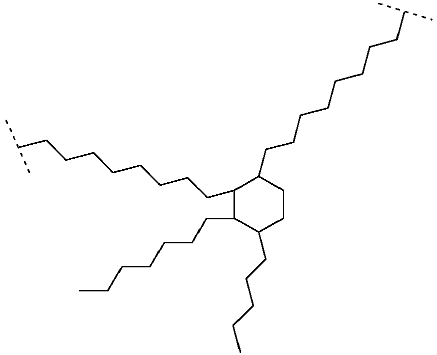

Selon un mode de réalisation, le groupe A₃ représente un radical alkylène ramifié comprenant de 2 à 600 atomes de carbone, ledit radical comprenant au moins un atome d'oxygène. De préférence, A₃ représente un radical -(CH₂CH(CH₃)O)ₗ-CH₂-CH(CH₃)-, avec l étant tel que défini précédemment.

Selon un mode de réalisation, A₃ est choisi dans le groupe constitué des radicaux divalents suivants :
- soit un radical alkylène choisi dans le groupe constitué de :
   ∘ un radical alkylène linéaire comprenant de 2 à 5 atomes de carbone ;
   ∘ un radical alkylène ramifié comprenant de 2 à 100 atomes de carbone, et
   ∘ un radical alkylène ramifié comprenant de 2 à 600 atomes de carbone, ledit radical comprenant au moins un atome d'oxygène ;
- soit un radical arylène comprenant de 6 à 30 atomes de carbone, ledit radical étant éventuellement substitué par au moins un substituant -OAlk, Alk étant tel que défini précédemment.

Selon un autre mode de réalisation, dans les composés de formules (I) et (IA), le groupe X₃ représente O ou NH. De préférence, X₃ représente O.

Selon un autre mode de réalisation, dans les composés de formules (I) et (IA), le groupe X₄ représente O ou NH. De préférence, X₄ représente O.

Selon un mode de réalisation, la présente invention concerne des composés de formule (IA-1) suivante : 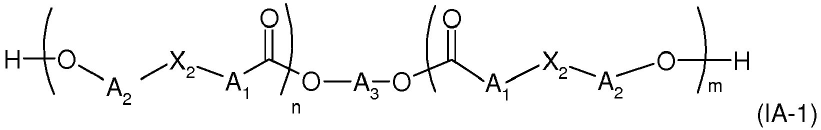 dans laquelle A₁, A₂, X₂, A₃, n et m sont tels que définis précédemment.

Selon l'invention, les composés de formule (IA-1) correspondent à des composés de formule (IA) dans laquelle X₁, X₃ et X₄ représentent O.

Selon un mode de réalisation, la présente invention concerne des composés de formule (IA-2) suivante : 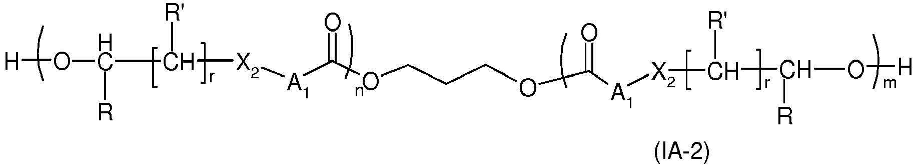 dans laquelle X₁, X₂, X₃, A₁, A₃, R, R', r, n et m sont tels que définis précédemment.

Selon l'invention, les composés de formule (IA-2) correspondent à des composés de formule (IA) dans laquelle X₁, X₃ et X₄ représentent O, A₁ représente -CH(R)-[CH(R')]ᵣ-et A₃ représente -(CH₂)₃-·

Selon un mode de réalisation, dans les composés de formules (IA-2) et (I-2), r représente 0 ou 1.

Selon un mode de réalisation, dans les composés de formules (IA-2), X₂ représente une liaison ou CH₂.

Selon un mode de réalisation, dans les composés de formule (I-2), X'₂ représente CH₂.

Selon un mode de réalisation, dans les composés de formule (I-2), X'₂ représente S.

Selon un mode de réalisation, dans les composés de formules (IA-2) et (I-2), R' représente H.

Selon un mode de réalisation, dans les composés de formules (IA-2) et (I-2), R' représente -OAlk, et notamment -OMe.

Selon un mode de réalisation, dans les composés de formules (IA-2) et (I-2), R représente H.

Selon un mode de réalisation, dans les composés de formules (IA-2) et (I-2), R représente -(CH₂)₅CH₃.

Selon un mode de réalisation, dans les composés de formules (IA-2) et (I-2), R représente -(CH₂)₇CH₃.

Selon un mode de réalisation, dans les composés de formules (IA-2) et (I-2), R représente -(CH₂)₇CH₃.

Selon un mode de réalisation, dans les composés de formules (IA-2) et (I-2), R représente -CH₂OMe.

Selon un mode de réalisation, dans les composés de formules (IA-2) et (I-2), A₁ représente -CH=CH-(CH₂)₇.

Selon un mode de réalisation, dans les composés de formules (IA-2) et (I-2), A₁ représente -(CH₂)₆₋.

Selon un mode de réalisation, dans les composés de formules (IA-2) et (I-2), A₁ représente -(CH₂)₇₋.

Selon un mode de réalisation, dans les composés de formules (IA-2) et (I-2), A₁ représente -(CH₂)₁₀-.

Selon un mode de réalisation, dans les composés de formule formules (IA-2) et (I-2), A₁ représente -CH[(CH₂)₇CH₃]-(CH₂)₈-.

Selon un mode de réalisation particulier, les composés de formules (IA), (IA-1) et (IA-2) sont choisis dans le groupe constitué de : 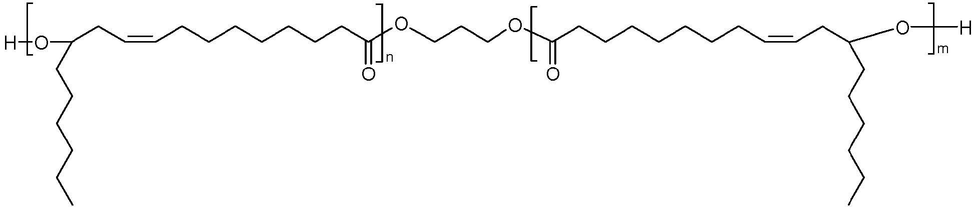 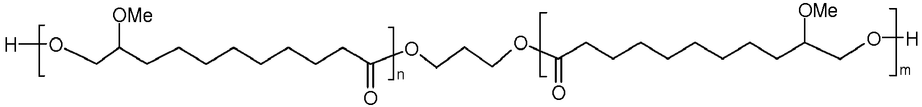 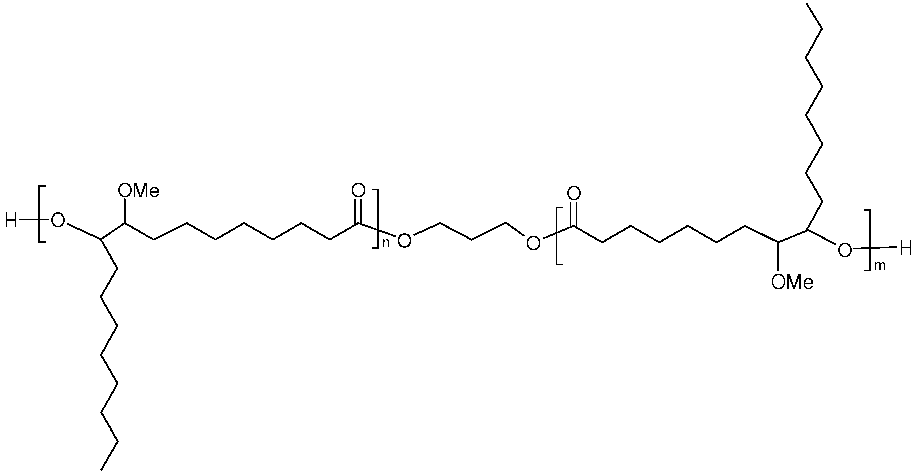 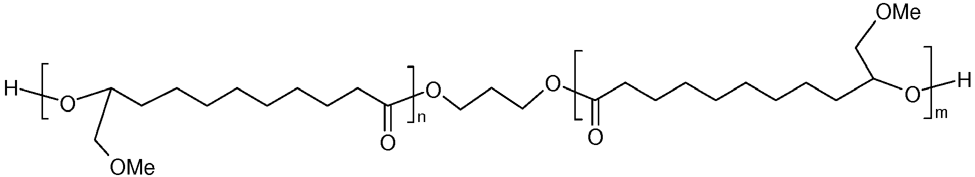 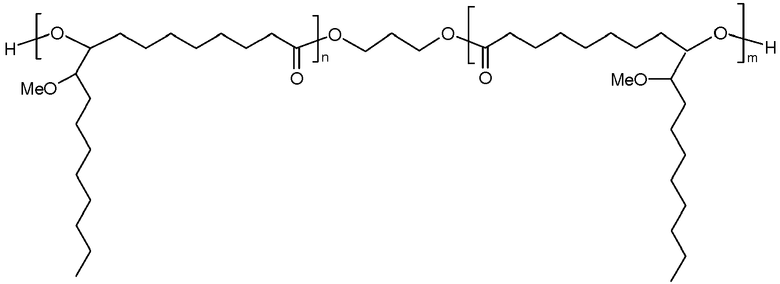 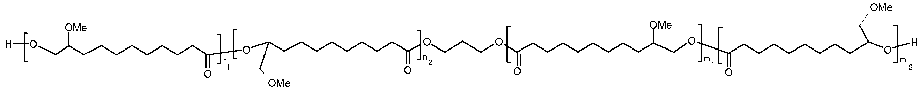 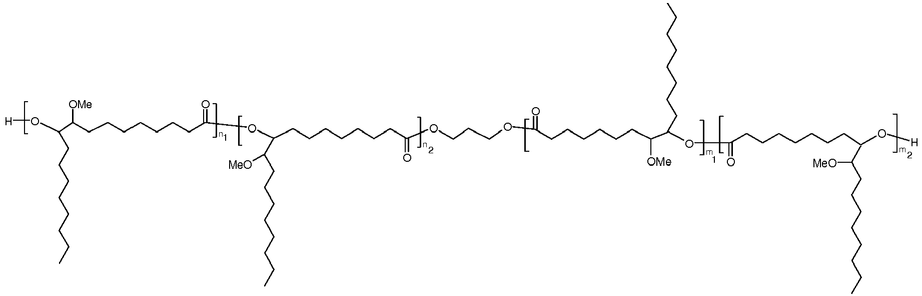 dans lesquels n, m, n₁, n₂, m₂ et m₁ sont tels que définis précédemment.

De préférence, parmi les composés de formules (IA), (IA-1) et (IA-2), on peut citer les composés suivants : 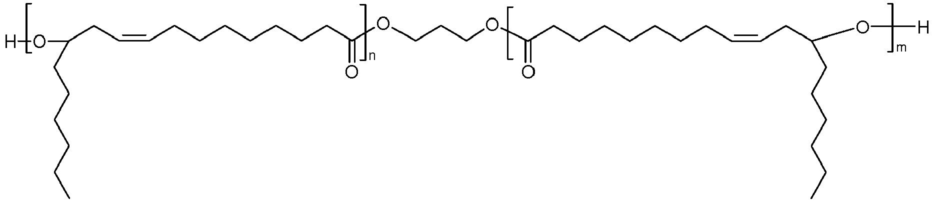 dans lesquels n et m sont tels que définis précédemment.

Selon un mode de réalisation, la présente invention concerne des composés de formule (IA-3) suivante : 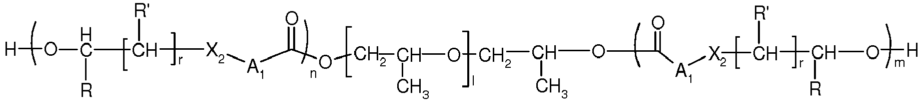 dans laquelle : X₁, X₂, X₃, A₁, A₃, R, R', l, r, n et m sont tels que définis précédemment dans la formule (IA).

Selon l'invention, les composés de formule (IA-3) correspondent à des composés de formule (IA) dans laquelle X₁, X₃ et X₄ représentent O, A₁ représente -CH(R)-[CH(R')]ᵣ- et A₃ représente -[CH₂CH(CH₃)O]ₗ-CH₂-CH(CH₃)-.

Selon un mode de réalisation, dans les composés de formules (IA-3) et (I-3), r représente 0 ou 1.

Selon un mode de réalisation, dans les composés de formules (IA-3), X₂ représente une liaison ou CH₂.

Selon un mode de réalisation, dans les composés de formule (I-3), X'₂ représente CH₂.

Selon un mode de réalisation, dans les composés de formule (I-3), X'₂ représente S.

Selon un mode de réalisation, dans les composés de formules (IA-3) et (I-3), R' représente H.

Selon un mode de réalisation, dans les composés de formules (IA-3) et (I-3), R' représente -OAlk, et notamment -OMe.

Selon un mode de réalisation, dans les composés de formules (IA-3) et (I-3), R représente H.

Selon un mode de réalisation, dans les composés de formules (IA-3) et (I-3), R représente -(CH₂)₅CH₃.

Selon un mode de réalisation, dans les composés de formules (IA-3) et (I-3), R représente -(CH₂)₇CH₃.

Selon un mode de réalisation, dans les composés de formules (IA-2) et (I-2), R représente -(CH₂)₇CH₃.

Selon un mode de réalisation, dans les composés de formules (IA-2) et (I-2), R représente -CH₂OMe.

Selon un mode de réalisation, dans les composés de formules (IA-3) et (I-3), A₁ représente -CH=CH-(CH₂)₇.

Selon un mode de réalisation, dans les composés de formules (IA-3) et (I-3), A₁ représente -(CH₂)₆₋.

Selon un mode de réalisation, dans les composés de formules (IA-3) et (I-3), A₁ représente -(CH₂)₇₋.

Selon un mode de réalisation, dans les composés de formules (IA-3) et (I-3), A₁ représente -(CH₂)₁₀-.

Selon un mode de réalisation, dans les composés de formule formules (IA-3) et (I-3), A₁ représente -CH[(CH₂)₇CH₃]-(CH₂)₈-.

Selon un mode de réalisation particulier, parmi les composés de formule (IA-3), on peut citer les composés suivants : 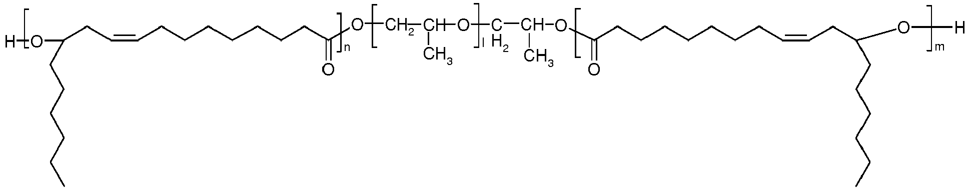 dans lesquels n, l et m sont tels que définis précédemment.

Selon un mode de réalisation, la présente invention concerne des composés de formule (IA-4) suivante : 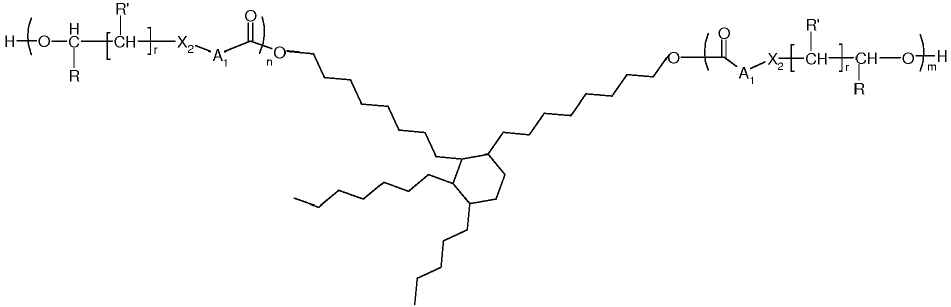 dans laquelle : X₂, A₁, R, R', r, n et m sont tels que définis précédemment dans la formule (IA).

Selon l'invention, les composés de formule (IA-4) correspondent à des composés de formule (IA) dans laquelle X₁, X₃ et X₄ représentent O, A₂ représente -CH(R)-[CH(R')]ᵣ- et A₃ représente :

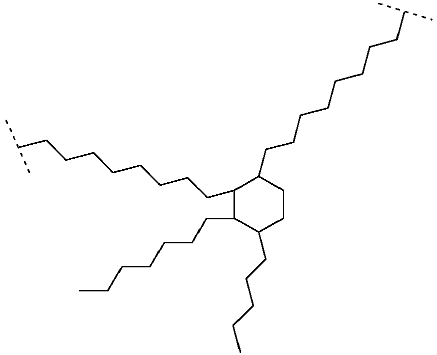

La présente invention concerne également un procédé de préparation de composés de formule (IA) telle que définie ci-dessus, comprenant une étape de polycondensation d'un composé de formule (I') 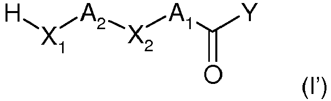 ou d'un mélange de composés de formule (I'),
dans laquelle :
- Y représente -OH, -Cl ou -OAlk, avec Alk représentant un groupe alkyle, linéaire ou ramifié, comprenant de 1 à 20 atomes de carbone, de préférence de 1 à 10, et préférentiellement de 1 à 2 ;
- X₁, X₂, A₂ et A₁ sont tels que définis précédemment ;
avec un composé de formule (II') suivante :

H-X₃-A₃-X₄-H (II').

dans laquelle X₃, X₄ et A₃ sont tels que définis précédemment.

Selon l'invention, les composés de formule (II') peuvent être choisis dans le groupe constitué des diols, diamines et aminoalcools.

Dans le cadre de l'invention, et sauf mention contraire, on entend par « aminoalcool », un composé mixte de formule (II') comprenant un radical hydroxy -OH et un radical amine -NH₂. On peut par exemple citer les composés de formule (II') dans laquelle X₃ (ou X₄) représente O et X₄ (ou respectivement X₃) représente NH, à savoir : HO-A₃-NH₂.

Selon l'invention, lorsque les composés de formule (II') représentent des diols, à savoir HO-A₃-OH, ils peuvent être choisis dans le groupe constitué de : éthylène glycol, propylène glycol, 1,3-propanediol, 1,4-butanediol, 1,3-butanediol, 1,5-pentanediol, poly(propylène glycol), poly(éthylène glycol) et d'un diol de dimère d'acide gras en C36 (tel que le Pripol®).

Selon l'invention, lorsque les composés de formule (II') représentent des diamines, à savoir H₂N-A₃-NH₂, ils peuvent être choisis dans le groupe constitué de : éthylènediamine, 1,3-diaminopropane, 1,4-diaminobutane, 1,5-diaminopentane, 1,6-diaminohexane, α,ω-NH₂ poly(propylène glycol) (Jeffamine)

Selon l'invention, lorsque les composés de formule (II') représentent des aminoalcools, ils peuvent être choisis dans le groupe constitué de : éthanolamine, propanolamine, aminopentanol, aminohexanol.

Selon un mode de réalisation, les composés de formule (II') sont des diols.

Selon un mode de réalisation, le composé de formule (II') est le 1,3-propanediol, correspondant à un composé de formule (II') où X₃ et X₄ représente O, et A₃ représente un groupe propyle.

Selon un mode de réalisation, le composé de formule (II') est le polypropylèneglycol, correspondant à un composé de formule (II') où X₃ et X₄ représente O, et A₃ représente un groupe--[(CH₂CH(CH₃)O]ₗ-CH₂-CH(CH₃)-, l étant tel que défini précédemment.

Selon un mode de réalisation, le composé de formule (II') est un diol de dimère d'acide gras en C36, et de préférence le Pripol®.

Selon l'invention, les composés de formule (I') peuvent être des hydroxyesters, des hydroxyacides, des aminoacides ou des aminoesters.

Dans le cadre de l'invention, et sauf mention contraire, on entend par « hydroxyester», un composé mixte de formule (I') comprenant un radical hydroxy -OH et un radical ester. On peut par exemple citer les composés de formule (I') dans laquelle X₁ représente O et Y représente -OAlk.

Dans le cadre de l'invention, et sauf mention contraire, on entend par « hydroxyacide», un composé mixte de formule (I') comprenant un radical hydroxy -OH et un radical acide carboxylique. On peut par exemple citer les composés de formule (I') dans laquelle X₁ représente O et Y représente OH.

Dans le cadre de l'invention, et sauf mention contraire, on entend par « aminoacide», un composé mixte de formule (I') comprenant un radical amino -NH₂ et un radical acide carboxylique. On peut par exemple citer les composés de formule (I') dans laquelle X₁ représente NH et Y représente OH.

Dans le cadre de l'invention, et sauf mention contraire, on entend par « hydroxyester», un composé mixte de formule (I') comprenant un radical amino -NH₂ et un radical ester. On peut par exemple citer les composés de formule (I') dans laquelle X₁ représente NH et Y représente -OAlk.

Selon l'invention, les composés de formule (I') peuvent être choisis dans le groupe constitué de :

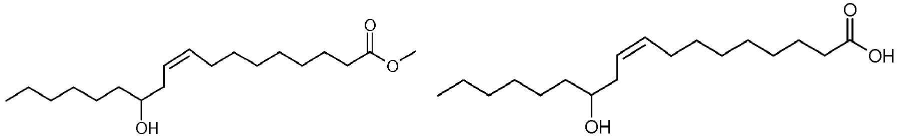

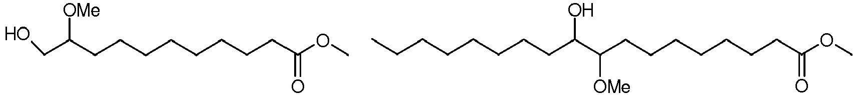

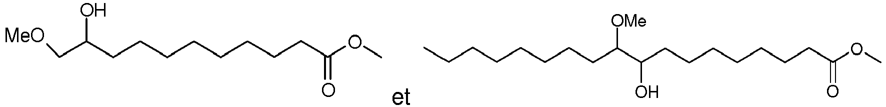

Selon l'invention, le procédé de préparation de composés de formule (IA) peut être réalisé en présence d'un mélange de composés de formule (I'), les composés de formule (I') étant différents. Les composés de formule (I') peuvent différer de par la nature des substituants X₁, A₂, X₂, A₁ ou Y.

Selon un mode de réalisation, le procédé de préparation de composés de formule (IA) est réalisé en présence d'un mélange de composés de formule (I') suivants :

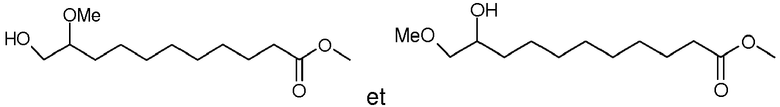

Selon un mode de réalisation, le procédé de préparation de composés de formule (IA) est réalisé en présence d'un mélange de composés de formule (I') suivants :

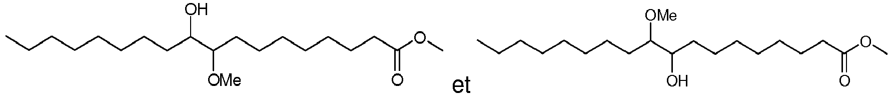

Selon un mode de réalisation, le procédé de préparation de composés de formule (IA) est réalisé en présence du composé de formule (I') suivante :

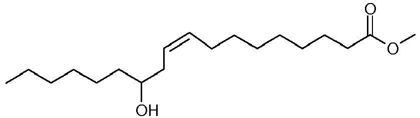

Selon un mode de réalisation, dans les composés de formule (I'), Y représente un groupe -OAlk, Alk étant tel que défini précédemment. De préférence, Alk représente un groupe méthyle.

Selon un autre mode de réalisation, dans les composés de formule (I'), Y représente un groupe OH.

Selon un mode de réalisation, dans les composés de formule (I'), X₁ représente O, A₂ représente -CH[(CH₂)₅CH₃]-, X₂ représente CH₂, A₁ représente -CH=CH-(CH₂)₇- et Y représente -OCH₃.

Selon un mode de réalisation, dans les composés de formule (I'), X₁ représente O, A₂ représente -CH[(CH₂)₅CH₃]-, X₂ représente CH₂, A₁ représente -CH=CH-(CH₂)₇- et Y représente -OH.

Selon un mode de réalisation, dans les composés de formule (I'), X₁ représente O, A₂ représente -CH₂CH(OMe)-, X₂ représente -CH₂-, A₁ représente -(CH₂)₇- et Y représente - OCH₃.

Selon un mode de réalisation, dans les composés de formule (I'), X₁ représente O, A₂ représente -CH[(CH₂)₇CH₃]-CH(OMe)-, X₂ représente une liaison, A₁ représente -(CH₂)₇- et Y représente -OCH₃.

Selon un mode de réalisation, dans les composés de formule (I'), X₁ représente O, A₂ représente -CH(CH₂OMe)-, X₂ représente -CH₂-, A₁ représente -(CH₂)₇- et Y représente - OCH₃.

Selon un mode de réalisation, dans les composés de formule (I'), X₁ représente O, A₂ représente -CH[CH(OMe)(CH₂)₇CH₃]-, X₂ représente -CH₂-, A₁ représente -(CH₂)₆- et Y représente -OCH₃.

De préférence, le composé de formule (I') est :

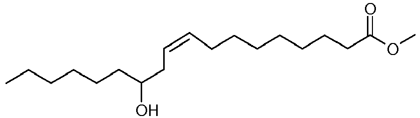

Selon un mode de réalisation, lorsque le procédé de préparation d'un composé de formule (IA) est réalisé en présence d'un mélange de composés de formule (I'), ledit procédé conduit à des composés de formule (IA) comprenant des motifs de répétition N différents, et des motifs de répétition M différents.

Selon l'invention, le procédé de préparation d'un composé de formule (IA) peut être réalisé en présence d'un catalyseur, notamment choisi parmi : Ti(BuO)₄ , Ti(iPrO)₄, Zn(Ac)₂, Sn(Oct)₂, TBD, MTBD, carbènes N-hétérocycliques.

En particulier, le catalyseur est Ti(BuO)₄.

Selon l'invention, le contrôle du ratio molaire composé de formule (II')/composé de formule (I') peut permettre de contrôler les valeurs de n et m.

Selon un mode de réalisation, la quantité molaire d'un composé de formule (II') est comprise de 0,01 à 1, de préférence de 0,02 à 0,08 par rapport à la quantité molaire d'un composé de formule (I').

Selon un mode de réalisation, la réaction est réalisée à une température de 140°C à 200°C, pendant plusieurs heures, et notamment pendant une à dix heures.

Selon l'invention, la réaction peut être réalisée sous pression atmosphérique ou sous vide, à une pression de 5 à 20 mbar.

Selon un mode de réalisation, lorsque le diol est le 1,3-propanediol, la réaction est réalisée à 140°C pendant 2 heures, puis à 180°C pendant 1 heure sous flux d'azote, et enfin sous vide à 180°C pendant 10 à 24h environ.

Selon un mode de réalisation, lorsque le diol est le PPG ou le Pripol®, la réaction est réalisée à 200°C, à une pression comprise de 6 à 20 mbar, pendant 3 à 10 heures.

Selon un mode de réalisation, le produit issu de la réaction de polymérisation subit un post-traitement, par dissolution dans le dichlorométhane et précipitation dans un solvant tel que le méthanol.

La présente invention concerne également des composés de formule (II) suivante : 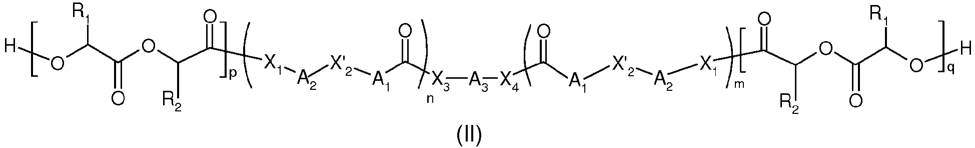 dans laquelle : X₁, X'₂, X₃, X₄, A₁, A₂, A₃, R₂, R₁, n, p, q et m sont tels que définis précédemment.

Selon un mode de réalisation, dans la formule (II), R₁ représente un groupe alkyle tel que défini ci-dessus, et notamment un méthyle.

Selon un mode de réalisation, dans la formule (II), R₂ représente un groupe alkyle tel que défini ci-dessus, et notamment un méthyle.

Selon un mode de réalisation, dans la formule (II), p représente un nombre entier compris de 10 à 500, de préférence de 50 à 300, et préférentiellement d'environ 200.

Selon un mode de réalisation, dans la formule (II), q représente un nombre entier compris de 10 à 500, de préférence de 50 à 300, et préférentiellement d'environ 200.

Selon un mode de réalisation, dans les composés de formule (II), X₁ représente O.

Selon un mode de réalisation, dans la formule (II), n est compris de 5 à 50, et de préférence de 10 à 25.

Selon un mode de réalisation, dans la formule (II), m est compris de 5 à 50, et de préférence de 10 à 25.

Selon un mode de réalisation, dans les composés de formule (II), le groupe A₁ représente un radical alkylène linéaire comprenant 9 atomes de carbone et une insaturation. De préférence, le groupe A₁ représente -CH=CH-(CH₂)₇-.

Selon un mode de réalisation, dans les composés de formule (II), le groupe A₁ représente -(CH₂)₇-.

Selon un mode de réalisation, dans les composés de formule (II), le groupe A₁ représente -(CH₂)₆-.

Selon un mode de réalisation, dans les composés de formules (II), le groupe A₁ représente un radical alkylène ramifié, comprenant 17 atomes de carbone. De préférence, le groupe A₁ représente -CH[(CH₂)₇CH₃]-(CH₂)₈-.

Selon un mode de réalisation, dans les composés de formule (II), le groupe A₁ représente -(CH₂)₁₀-.

Selon un mode de réalisation, dans les composés de formule (II), le groupe X'₂ représente S.

Selon un mode de réalisation, dans les composés de formule (II), le groupe X'₂ représente -CH₂-.

Selon un mode de réalisation, dans les composés de formule (II), A₂ représente -CH₂CH(OMe)- ou -CH₂CH₂-.

Selon un autre mode de réalisation, dans les composés de formule (II), le groupe A₂ représente -CH[(CH₂)₅CH₃]-, -CH[(CH₂)₇CH₃]-CH(OMe)-, -CH(CH₂OMe)-, ou -CH[CH(OMe)-(CH₂)₇-CH₃]-.

Selon un autre mode de réalisation, dans les composés de formule (II), le groupe A₃ représente un radical alkylène linéaire comprenant de 2 à 10 atomes de carbone, de préférence de 2 à 5 atomes de carbone. De préférence, le groupe A₃ représente -(CH₂)₃-.

Selon un mode de réalisation, le groupe A₃ représente un radical alkylène ramifié comprenant de 2 à 600 atomes de carbone, ledit radical comprenant au moins un atome d'oxygène. De préférence, A₃ représente un radical -[CH₂CH(CH₃)O]ₗ-CH₂CH(CH₃)-, avec l étant tel que défini précédemment.

Selon un mode de réalisation particulier, la présente invention concerne des composés de formule (II-1) suivante : 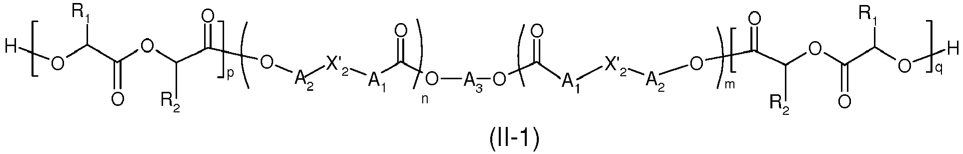 dans laquelle A₁, A₂, X₂, A₃, R₁, R₂ n, m, p et q sont tels que définis précédemment.

Selon l'invention, les composés de formule (II-1) correspondent à des composés de formule (II) dans laquelle X₁, X₃ et X₄ représentent O.

Selon un mode de réalisation, la présente invention concerne des composés de formule (II-2) suivante : 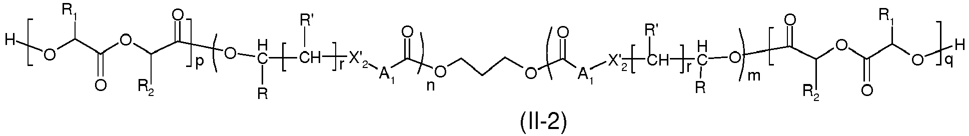 dans laquelle A₁, X'₂, R₁, R₂, R, R', r, l, n, m, p et q sont tels que définis précédemment.

Selon l'invention, les composés de formule (II-2) correspondent à des composés de formule (II) dans laquelle X₁, X₃ et X₄ représentent O, A₁ représente -CH(R)-[CH(R')]ᵣ-, et A₃ représente -(CH₂)₃-.

Des composés de formules (II-2) préférés sont ceux pour lesquels, R₁ représente méthyle, R₂ représente méthyle, R représente -(CH₂)₅CH₃, r représente 0, X'₂ représente CH₂, A₁ représente -CH=CH-(CH₂)₇-.

Des composés de formules (II-2) préférés sont ceux pour lesquels, R₁ représente méthyle, R₂ représente méthyle, R représente H, r représente 1, R' représente H, X'₂ représente S, A₁ représente -CH[(CH₂)₇CH₃]-(CH₂)₈-.

Des composés de formules (II-2) préférés sont ceux pour lesquels, R₁ représente méthyle, R₂ représente méthyle, R représente H, r représente 1, R' représente OMe, X'₂ représente -CH₂-, A₁ représente -(CH₂)₇-.

Des composés de formules (II-2) préférés sont ceux pour lesquels, R₁ représente méthyle, R₂ représente méthyle, R représente H, r représente 1, R' représente H, X'₂ représente S, A₁ représente -(CH₂)₁₀-.

Des composés de formules (II-2) préférés sont ceux pour lesquels, R₁ représente méthyle, R₂ représente méthyle, R représente -(CH₂)₇CH₃, r représente 1, R' représente OMe, X'₂ représente -CH₂- et A₁ représente -(CH₂)₆-.

Des composés préférés de formule (II-2) sont ceux pour lesquels, R₁ représente méthyle, R₂ représente méthyle, R représente -CH₂OMe, r représente 0, X'₂ représente -CH₂- et A₁ représente -(CH₂)₇-.

Des composés préférés de formule (II-2) sont ceux pour lesquels, R₁ représente méthyle, R₂ représente méthyle, R représente -CH(OMe)(CH₂)₇CH₃, r représente 0, X'₂ représente -CH₂- et A₁ représente -(CH₂)₆-.

De préférence, parmi les composés de formules (II), (II-1) et (II-2), on peut citer les composés suivants : 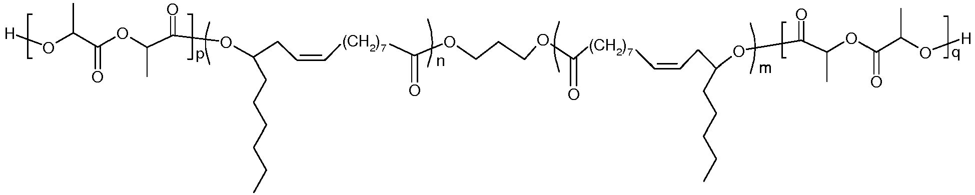 dans lesquels p, n, m et q sont tels que définis précédemment.

Selon un mode de réalisation, dans les composés de formule (II), (II-1) et (II-2), p+q représente environ 347 et n+m représente environ 36.

Selon un mode de réalisation, dans les composés de formule (II), (II-1) et (II-2), p+q représente environ 270 et n+m représente environ 36.

Selon un mode de réalisation, dans les composés de formule (II), (II-1) et (II-2), p+q représente environ 146 et n+m représente environ 36.

Selon un mode de réalisation, dans les composés de formule (II), (II-1) et (II-2), p+q représente environ 125 et n+m représente environ 36.

Selon un mode de réalisation, la présente invention concerne des composés de formule (II-3) suivante : 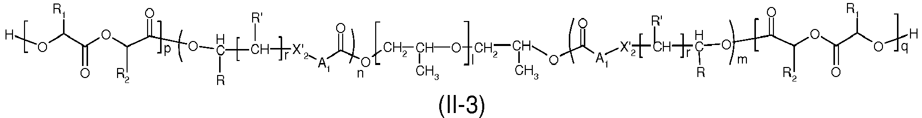 dans laquelle X₁, X₃, A₁, A₃, X'₂, R, R', r, l, n, p, q et m sont tels que définis précédemment. Selon l'invention, les composés de formule (II-3) sont des composés de formule (II) dans laquelle X₁, X₃ et X₄ représentent O, A₁ représente -CH(R)-[CH(R')]ᵣ- et A₃ représente -[CH₂-CH(CH₃)-O]ₗ-CH₂-CH(CH₃)-.

De préférence, parmi les composés de formules (II-3), on peut citer les composés suivants : 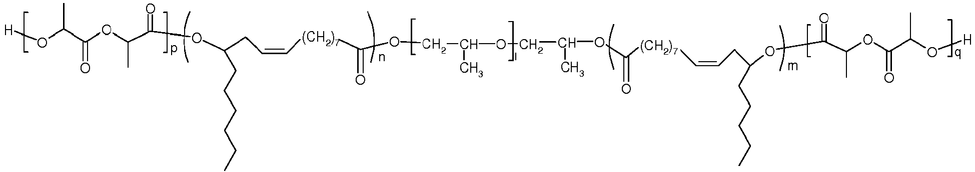 dans lesquels l, p, n, m et q sont tels que définis précédemment.

La présente invention concerne également un procédé de préparation de composés de formule générale (II) susmentionnée, comprenant une étape de polymérisation par ouverture de cycle d'un composé de formule (VII) suivante avec un composé de formule (I) susmentionnée : 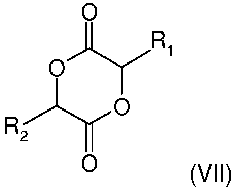 dans laquelle R₁ et R₂ représentent, indépendamment l'un de l'autre, H ou un groupe alkyle, linéaire ou ramifié, comprenant de 1 à 20 atomes de carbone, de préférence de 2 à 12, et préférentiellement de 2 à 10, ledit groupe alkyle pouvant éventuellement comprendre au moins une double liaison.

Selon l'invention, le procédé de préparation des composés de formule (II) peut être réalisé en présence d'un catalyseur, notamment choisi dans le groupe constitué de : octoate d'étain (Sn(Oct)₂), Ti(BuO)₄, Ti(iPrO)₄, Zn(Ac)₂, TBD et des carbènes N-hétérocycliques. De préférence, le catalyseur utilisé est l'octoate d'étain (Sn(Oct)₂).

Selon un mode de réalisation, le catalyseur est utilisé de 10% molaire à 70% molaire par rapport au composé de formule (I). De préférence, de 25% à 60% molaire de catalyseur sont utilisés, et préférentiellement 50% molaire.

Selon un mode de réalisation, une solution d'un composé (I) dans un solvant tel que le toluène, benzène ou xylène, est ajoutée dans une solution d'un composé (VII) dans un solvant tel que le toluène, benzène ou xylène. De préférence, une solution d'un composé (I) dans le toluène est ajoutée à une solution d'un composé (VII) dans le toluène.

Selon l'invention, la réaction de polymérisation peut être effectuée à une température allant de 60°C à 150°C, de préférence de 90°C à 150°C. En particulier, la réaction est réalisée à 140°C au reflux.

De préférence, la réaction est réalisée pendant 4 heures.

Selon un mode de réalisation, dans la formule (VII), R₁ représente un groupe méthyle, et de préférence un méthyle lévogyre.

Selon un mode de réalisation, dans la formule (VII), R₂ représente un groupe méthyle, et de préférence un méthyle lévogyre.

Selon l'invention, la réaction de polymérisation susmentionnée correspond à une polymérisation par ouverture de cycle du composé de formule (VII), amorcée par les fonctions terminales du composé de formule (I) susmentionnée.

En particulier, lorsque X₁ représente O, les fonctions terminales des composés (I) sont des fonctions hydroxyles.

En particulier, lorsque X₁ représente NH, les fonctions terminales des composés (I) sont des fonctions amines.

Selon l'invention, les composés de formule (II) peuvent correspondre à des copolymères à blocs, et notamment des copolymères triblocs avec un bloc central et deux blocs latéraux.

Selon l'invention, les copolymères triblocs peuvent comprendre un bloc central correspondant notamment à : 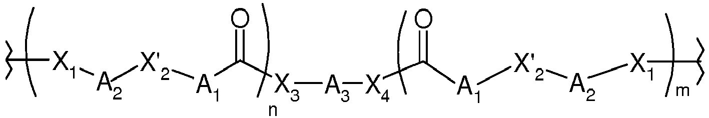 et des blocs latéraux de chaque côté du bloc central correspondant à :

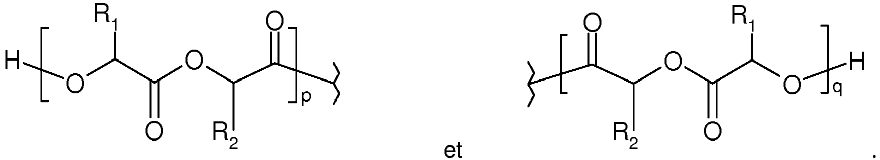

Selon l'invention, le bloc central peut provenir des composés de formule (I), tandis que les blocs latéraux peuvent provenir des composés de formule (VII).

Selon l'invention, la taille des blocs latéraux peut dépendre du ratio molaire composé de formule (VII)/composé de formule (I). Ainsi, en faisant varier la quantité de matière du composé de formule (VII) susmentionnée par rapport à la quantité de matière du composé de formule (I), on peut obtenir des copolymères triblocs de formule (II) de différentes compositions.

Selon un mode de réalisation, plus la valeur de ce ratio est élevée, plus la valeur de p et/ou q est élevée.

Selon un mode de réalisation, le ratio molaire composé de formule (VII)/composé de formule (I) est compris de 500:1 à 50:1, de préférence de 450:1 à 70:1.

Selon un mode de réalisation, le pourcentage massique des blocs latéraux susmentionnés dans les composés de formule (II) est compris de 40% en poids, de préférence de 50% en poids, de préférence de 70% en poids, et encore plus préférentiellement de 80% en poids, par rapport au poids total du composé de formule (II).

La présente invention concerne également des composés de formule (III) suivante : 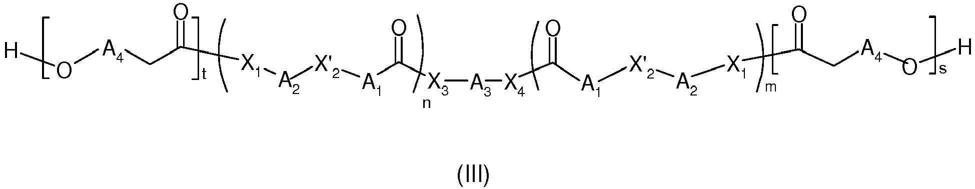 dans laquelle X₁, X'₂, X₃, X₄, A₁, A₂, A₃, A₄, t, s, net m sont tels que définis précédemment.

Selon un mode de réalisation, A₄ représente un radical éthylène.

Selon un mode de réalisation, A₄ représente un radical propylène.

Selon un mode de réalisation, A₄ représente un radical butylène.

Selon un mode de réalisation, A₄ représente un radical pentylène.

Selon un mode de réalisation, A₄ représente un radical hexylène.

Selon l'invention, dans la formule (III), t et s peuvent être identiques ou différents.

Selon un mode de réalisation, t représente un nombre entier compris de 2 à 500, et préférentiellement d'environ 400.

Selon un mode de réalisation, s représente un nombre entier compris de 2 à 500, et préférentiellement d'environ 400.

Selon un mode de réalisation particulier, la présente invention concerne des composés de formule (III-1) suivante : 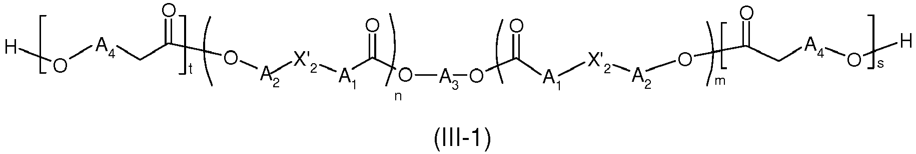 dans laquelle A₁, A₂, X'₂, A₃, A₄, n, m, t et s sont tels que définis précédemment.

Selon l'invention, les composés de formule (III-1) correspondent à des composés de formule (III) dans laquelle X₁, X₃ et X₄ représentent O.

Selon un mode de réalisation, la présente invention concerne des composés de formule (III-2) suivante : 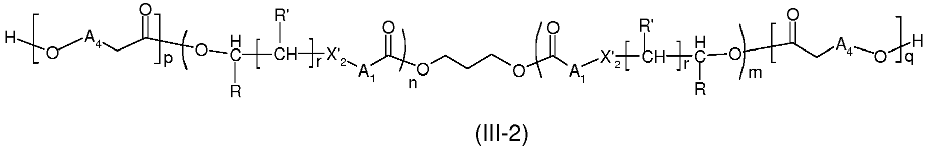 dans laquelle X'₂, A₁, A₄, R, R', r, p, q, n et m sont tels que définis précédemment.

Selon l'invention, les composés de formule (III-2) correspondent à des composés de formule (III) dans laquelle X₁, X₃ et X₄ représentent O, A₁ représente -CH(R)-[CH(R')]ᵣ-, et A₃ représente -(CH₂)₃-.

Des composés de formules (III-2) préférés sont ceux pour lesquels R représente -(CH₂)₅CH₃, r représente 0, X'₂ représente CH₂, A₁ représente -CH=CH-(CH₂)₇.

Des composés de formules (III-2) préférés sont ceux pour lesquels R représente H, r représente 1, R' représente H, X'₂ représente S, A₁ représente -CH[(CH₂)₇CH₃]-(CH₂)₈-.

Des composés de formules (III-2) préférés sont ceux pour lesquels R représente H, r représente 1, R' représente OMe, X'₂ représente -CH₂-, A₁ représente -(CH₂)₇-.

Des composés de formules (III-2) préférés sont ceux pour lesquels R représente H, r représente 1, R' représente H, X'₂ représente S, A₁ représente -(CH₂)₁₀-.

Des composés de formules (III-2) préférés sont ceux pour lesquels R représente -(CH₂)₇CH₃, r représente 1, R' représente OMe, X'₂ représente -CH₂- et A₁ représente -(CH₂)₆-.

Des composés de formule (III-2) préférés sont ceux pour lesquels, R représente -CH₂OMe, r représente 0, X'₂ représente -CH₂- et A₁ représente -(CH₂)₇-.

Des composés de formule (III-2) préférés sont ceux pour lesquels, R représente -CH[CH(OMe)(CH₂)₇CH₃], r représente 0, X'₂ représente -CH₂- et A₁ représente -(CH₂)₆-.

La présente invention concerne également un procédé de préparation de composés de formule générale (III) susmentionnée, comprenant une étape de polymérisation par ouverture de cycle d'un composé de formule (VIII) suivante avec un composé de formule (I) tel que défini ci-dessus : 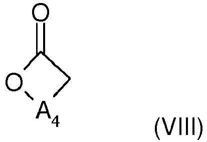 dans laquelle A₄ représente un radical alkylène divalent, linéaire ou ramifié, comprenant de 2 à 20 atomes de carbone, de préférence de 2 à 12, ledit radical comprenant éventuellement au moins une insaturation.

Selon l'invention, le procédé de préparation des composés de formule (III) peut être réalisé en présence d'un catalyseur, notamment choisi dans le groupe constitué de : octoate d'étain (Sn(Oct)₂), Ti(BuO)₄, Ti(iPrO)₄, Zn(Ac)₂, TBD et des carbènes N-hétérocycliques. De préférence, le catalyseur utilisé est l'octoate d'étain (Sn(Oct)₂).

Selon un mode de réalisation, le catalyseur est utilisé de 10% molaire à 70% molaire par rapport au composé de formule (I). De préférence, de 25% à 60% molaire de catalyseur sont utilisés, et préférentiellement 50% molaire.

Selon un mode de réalisation, une solution d'un composé (I) dans un solvant tel que le toluène, benzène ou xylène, est ajoutée dans une solution d'un composé (VIII) dans un solvant tel que le toluène, benzène ou xylène. De préférence, une solution d'un composé (I) dans le toluène est ajoutée à une solution d'un composé (VIII) dans le toluène.

Selon l'invention, la réaction de polymérisation peut être effectuée à une température allant de 60°C à 150°C, de préférence de 90°C à 150°C. En particulier, la réaction est réalisée à 140°C au reflux.

De préférence, la réaction est réalisée pendant 4 heures.

Selon l'invention, la réaction de polymérisation susmentionnée correspond à une polymérisation par ouverture de cycle du composé de formule (VIII), amorcée par les fonctions terminales du composé de formule (I) susmentionnée.

Selon l'invention, les composés de formule (III) peuvent correspondre à des copolymères à blocs, et notamment des copolymères triblocs avec un bloc central et deux blocs latéraux.

Selon l'invention, les copolymères triblocs peuvent comprendre un bloc central correspondant notamment à : 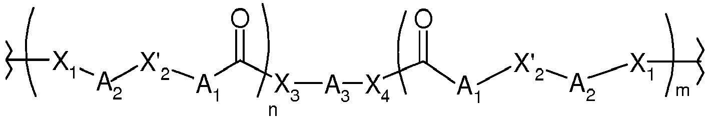 et des blocs latéraux de chaque côté du bloc central correspondant à :

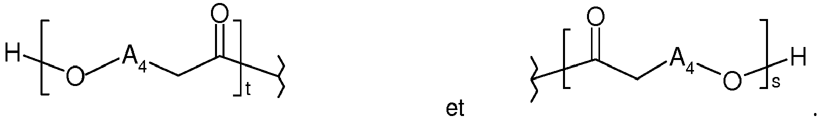

Selon l'invention, le bloc central peut provenir des composés de formule (I), tandis que les blocs latéraux peuvent provenir des composés de formule (VIII).

Selon l'invention, la taille des blocs latéraux peut dépendre du ratio molaire composé de formule (VIII)/composé de formule (I). Ainsi, en faisant varier la quantité de matière du composé de formule (VIII) susmentionnée par rapport à la quantité de matière du composé de formule (I), on peut obtenir des copolymères triblocs de formule (III) de différentes compositions.

Selon un mode de réalisation, plus la valeur de ce ratio est élevée, plus la valeur de t et/ou s est élevée.

Selon un mode de réalisation, le ratio molaire composé de formule (VIII)/composé de formule (I) est compris de 500 :1 à 50 :1, de préférence de 450 :1 à 70 :1.

Selon un mode de réalisation, le pourcentage massique des blocs latéraux susmentionnés dans les composés de formule (III) est compris de 40% en poids, de préférence de 50% en poids, de préférence de 70% en poids, et encore plus préférentiellement de 80% en poids, par rapport au poids total du composé de formule (III).

La présente invention concerne également des composés de formule (IV) suivante : 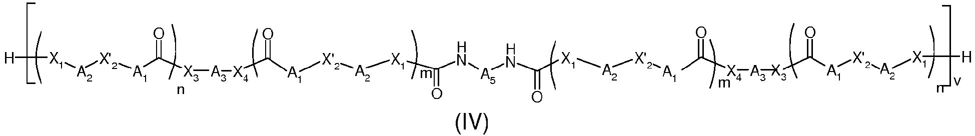 dans laquelle :
- X₁, X₃, X'₂, X₄, A₁, A₂, A₃, n et m sont tels que définis précédemment ;
- A₅ est choisi dans le groupe constitué de :
   ∘ un radical alkylène, linéaire ou ramifié, comprenant de 1 à 20 atomes de carbone, de préférence de 2 à 12, ledit radical comprenant éventuellement au moins une insaturation ;
   ∘ un radical arylène comprenant de 6 à 20 atomes de carbone, de préférence de 6 à 12, ledit radical arylène étant éventuellement substitué ;
   ∘ un radical cycloalkylène, comprenant de 3 à 20 atomes de carbone, de préférence de 5 à 10, ledit radical cycloalkylène étant éventuellement substitué ;
   ∘ un radical cycloalkylène-alkylène-cycloalkylène comprenant de 6 à 30 atomes de carbone ;
   ∘ un radical alkylène-cycloalkylène comprenant de 4 à 15 atomes de carbone ;
- v représente un nombre entier compris de 1 à 5000, de préférence de 1 à 1000, et préférentiellement de 2 à 500.

Selon un mode de réalisation, la présente invention concerne un procédé de préparation de composés de formule générale (IV) telle que définie ci-dessus, ledit procédé consistant en une réaction de polymérisation d'un composé de formule (I) tel que défini précédemment, avec un composé de formule (IX) suivante :

O=C=N-A₅-N=C=O (IX)

dans laquelle A₅ est choisi dans le groupe constitué de :
∘ un radical alkylène, linéaire ou ramifié, comprenant de 1 à 20 atomes de carbone, de préférence de 2 à 12, ledit radical comprenant éventuellement au moins une insaturation ;
∘ un radical arylène comprenant de 6 à 20 atomes de carbone, de préférence de 6 à 12, ledit radical arylène étant éventuellement substitué ;
∘ un radical cycloalkylène, comprenant de 3 à 20 atomes de carbone, de préférence de 5 à 10, ledit radical cycloalkylène étant éventuellement substitué ;
∘ un radical cycloalkylène-alkylène-cycloalkylène comprenant de 6 à 30 atomes de carbone ;
∘ un radical alkylène-cycloalkylène comprenant de 4 à 15 atomes de carbone.

La présente invention concerne également des composés de formule (V) suivante : 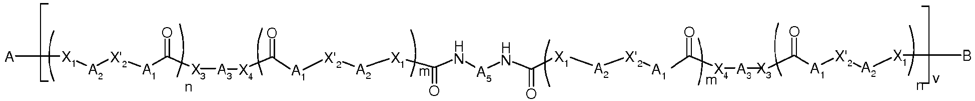 dans laquelle :
- X₁, X'₂, X₃, X₄, A₁, A₂, A₃, A₅, n, v et m sont tels que définis précédemment ;
- A et B représentent les radicaux suivants : 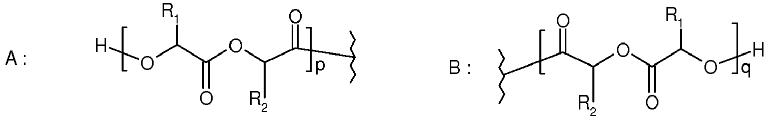 dans lesquels R₁, R₂, p et q sont tels que définis précédemment.

Selon un mode de réalisation, la présente invention concerne également un procédé de préparation de composés de formule générale (V) susmentionnée, ledit procédé consistant en une réaction de polymérisation d'un composé de formule (IV) tel que défini précédemment, avec un composé de formule (VII) suivante : 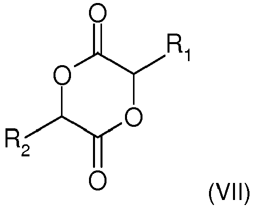 dans laquelle R₁ et R₂ représentent, indépendamment l'un de l'autre, H ou un groupe alkyle, linéaire ou ramifié, comprenant de 1 à 20 atomes de carbone, de préférence de 2 à 12, et préférentiellement de 2 à 10, ledit groupe alkyle pouvant éventuellement comprendre au moins une double liaison.

Selon l'invention, le procédé de préparation des composés de formule (V) peut être réalisé en présence d'un catalyseur, notamment choisi dans le groupe constitué de : octoate d'étain (Sn(Oct)₂), Ti(BuO)₄, Ti(iPrO)₄, Zn(Ac)₂, TBD et des carbènes N-hétérocycliques. De préférence, le catalyseur utilisé est l'octoate d'étain (Sn(Oct)₂).

Selon un mode de réalisation, le catalyseur est utilisé de 10% molaire à 70% molaire par rapport au composé de formule (IV). De préférence, de 25% à 60% molaire de catalyseur sont utilisés, et préférentiellement 50% molaire.

Selon un mode de réalisation, une solution d'un composé (IV) dans un solvant tel que le toluène, benzène ou xylène, est ajoutée dans une solution d'un composé (VII) dans un solvant tel que le toluène, benzène ou xylène. De préférence, une solution d'un composé (IV) dans le toluène est ajoutée à une solution d'un composé (VII) dans le toluène.

Selon l'invention, la réaction de polymérisation peut être effectuée à une température allant de 60°C à 150°C, de préférence de 90°C à 150°C. En particulier, la réaction est réalisée à 140°C au reflux.

De préférence, la réaction est réalisée pendant 4 heures.

Selon un mode de réalisation, dans la formule (VII), R₁ représente un groupe méthyle, et de préférence un méthyle lévogyre.

Selon un mode de réalisation, dans la formule (VII), R₂ représente un groupe méthyle, et de préférence un méthyle lévogyre.

Selon l'invention, la réaction de polymérisation susmentionnée correspond à une polymérisation par ouverture de cycle du composé de formule (VII), amorcée par les fonctions terminales du composé de formule (IV) susmentionnée.

Selon l'invention, les composés de formule (V) peuvent correspondre à des copolymères à blocs, et notamment des copolymères triblocs avec un bloc central et deux blocs latéraux.

Selon l'invention, les copolymères triblocs de formule (V) peuvent comprendre un bloc central correspondant notamment à : 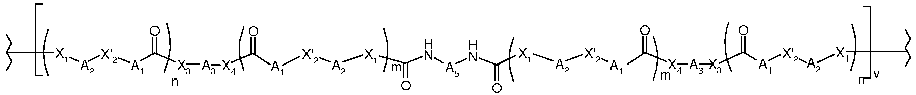 et des blocs latéraux de chaque côté du bloc central correspondant à :

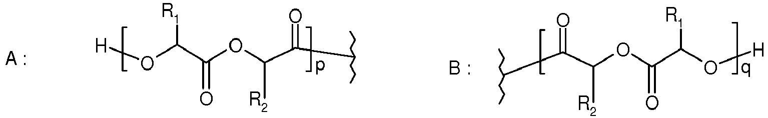

Selon l'invention, le bloc central peut provenir des composés de formule (IV), tandis que les blocs latéraux peuvent provenir des composés de formule (VII).

Selon l'invention, la taille des blocs latéraux peut dépendre du ratio molaire composé de formule (VII)/composé de formule (IV). Ainsi, en faisant varier la quantité de matière du composé de formule (VII) susmentionnée par rapport à la quantité de matière du composé de formule (I), on peut obtenir des copolymères triblocs de formule (V) de différentes compositions.

Selon un mode de réalisation, plus la valeur de ce ratio est élevée, plus la valeur de p et/ou q est élevée.

Selon un mode de réalisation, le ratio molaire composé de formule (VII)/composé de formule (IV) est compris de 500 :1 à 50 :1, de préférence de 450 :1 à 70 :1.

Selon un mode de réalisation, le pourcentage massique des blocs latéraux susmentionnés dans les composés de formule (V) est compris de 40% en poids, de préférence de 50% en poids, de préférence de 70% en poids, et encore plus préférentiellement de 80% en poids, par rapport au poids total du composé de formule (V).

Selon un autre objet, la présente invention concerne également les composés de formule (VI) suivante : 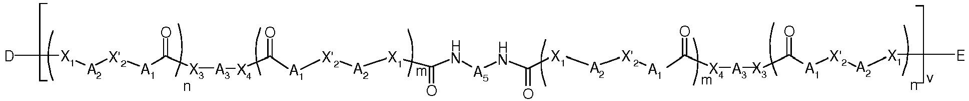 dans laquelle X₁, X'₂, X₃, X₄, A₁, A₂, A₃, A₅, D, E, A₄, t, s, n, v et m sont tels que définis précédemment.

Selon un mode de réalisation, la présente invention concerne un procédé de préparation de composés de formule générale (VI) susmentionnée, ledit procédé consistant en une réaction de polymérisation d'un composé de formule (IV) tel que définie précédemment, avec un composé de formule (VIII) suivante : 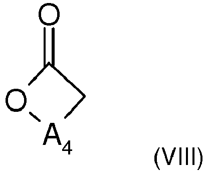 dans laquelle A₄ représente un radical alkylène divalent, linéaire ou ramifié, comprenant de 2 à 20 atomes de carbone, de préférence de 2 à 12, ledit radical comprenant éventuellement au moins une insaturation.

Selon l'invention, le procédé de préparation des composés de formule (VI) peut être réalisé en présence d'un catalyseur, notamment choisi dans le groupe constitué de : octoate d'étain (Sn(Oct)₂), Ti(BuO)₄, Ti(iPrO)₄, Zn(Ac)₂, TBD et des carbènes N-hétérocycliques. De préférence, le catalyseur utilisé est l'octoate d'étain (Sn(Oct)₂).

Selon un mode de réalisation, le catalyseur est utilisé de 10% molaire à 70% molaire par rapport au composé de formule (IV). De préférence, de 25% à 60% molaire de catalyseur sont utilisés, et préférentiellement 50% molaire.

Selon un mode de réalisation, une solution d'un composé (IV) dans un solvant tel que le toluène, benzène ou xylène, est ajoutée dans une solution d'un composé (VIII) dans un solvant tel que le toluène, benzène ou xylène. De préférence, une solution d'un composé (IV) dans le toluène est ajoutée à une solution d'un composé (VIII) dans le toluène.

Selon l'invention, la réaction de polymérisation peut être effectuée à une température allant de 60°C à 150°C, de préférence de 90°C à 150°C. En particulier, la réaction est réalisée à 140°C au reflux.

De préférence, la réaction est réalisée pendant 4 heures.

Selon l'invention, la réaction de polymérisation susmentionnée correspond à une polymérisation par ouverture de cycle du composé de formule (VIII), amorcée par les fonctions terminales du composé de formule (IV) susmentionnée.

Selon l'invention, les composés de formule (VI) peuvent correspondre à des copolymères à blocs, et notamment des copolymères triblocs avec un bloc central et deux blocs latéraux.

Selon l'invention, les copolymères triblocs de formule (VI) peuvent comprendre un bloc central correspondant notamment à : 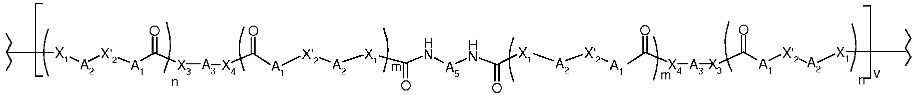 et des blocs latéraux de chaque côté du bloc central correspondant à :

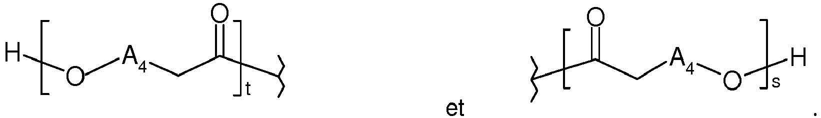

Selon l'invention, le bloc central peut provenir des composés de formule (IV), tandis que les blocs latéraux peuvent provenir des composés de formule (VIII).

Selon l'invention, la taille des blocs latéraux peut dépendre du ratio molaire composé de formule (VIII)/composé de formule (IV). Ainsi, en faisant varier la quantité de matière du composé de formule (VIII) susmentionnée par rapport à la quantité de matière du composé de formule (IV), on peut obtenir des copolymères triblocs de formule (VI) de différentes compositions.

Selon un mode de réalisation, plus la valeur de ce ratio est élevée, plus la valeur de t et/ou s est élevée.

Selon un mode de réalisation, le ratio molaire composé de formule (VIII)/composé de formule (IV) est compris de 500:1 à 50:1, de préférence de 450:1 à 70:1.

Selon un mode de réalisation, le pourcentage massique des blocs latéraux susmentionnés dans les composés de formule (VI) est compris de 40% en poids, de préférence de 50% en poids, de préférence de 70% en poids, et encore plus préférentiellement de 80% en poids, par rapport au poids total du composé de formule (VI).

La présente invention concerne également une composition comprenant une matrice de polyester, poly(chlorure de vinyle), polyuréthane, polyamide, poly(acrylate d'alkyle), poly(méthacrylate d'alkyle), polystyrène ou polyoléfine, et au moins un composé de formules (II), (III), (IV), (V) ou(VI) ou leurs mélanges, et éventuellement au moins un autre polymère notamment choisi parmi le poly(butadiène), le poly(isoprène), le poly(ε-caprolactone), le poly(tétrahydrofurane) et le poly(acide ricinoléique).

Selon un mode de réalisation, l'invention concerne des compositions comprenant de 0% à 40% en poids, de préférence de 5% à 20% en poids d'un polymère choisi parmi le poly(butadiène), le poly(isoprène), le poly(ε-caprolactone), le poly(tétrahydrofurane) et le poly(acide ricinoléique) dans la matrice de polyester, poly(chlorure de vinyle), polyuréthane, polyamide, poly(acrylate d'alkyle), poly(méthacrylate d'alkyle), polystyrène ou polyoléfine, par rapport à la masse totale de la composition.

Selon un mode de réalisation, l'invention concerne des compositions comprenant de 60% à 95% en poids, de préférence de 80% à 90%, de matrice de polyester, poly(chlorure de vinyle), polyuréthane, polyamide, poly(acrylate d'alkyle), poly(méthacrylate d'alkyle), polystyrène ou polyoléfine,

Selon un mode de réalisation, l'invention concerne des compositions comprenant de 2% à 40% en poids, de préférence de 5% à 20% en poids de composé de formules (II), (III), (IV), (V) ou(VI), par rapport à la masse totale de la composition.

Selon un mode de réalisation, l'invention concerne des compositions comprenant 90% en poids d'une matrice de polyester, poly(chlorure de vinyle), polyuréthane, polyamide, poly(acrylate d'alkyle), poly(méthacrylate d'alkyle), polystyrène ou polyoléfine, de préférence de poly(acide lactique), 5% en poids d'un composé de formules (II), (III), (IV), (V) ou (VI), et 5% en poids d'un autre polymère notamment choisi parmi le poly(butadiène), le poly(isoprène), le poly(ε-caprolactone), le poly(tétrahydrofurane) et le poly(acide ricinoléique).

Selon un mode de réalisation, l'invention concerne des compositions comprenant 80% en poids d'une matrice de polyester, poly(chlorure de vinyle), polyuréthane, polyamide, poly(acrylate d'alkyle), poly(méthacrylate d'alkyle), polystyrène ou polyoléfine, de préférence de poly(acide lactique), 10% en poids d'un composé de formules (II), (III), (IV), (V) ou (VI), et 10% en poids d'un autre polymère notamment choisi parmi le poly(butadiène), le poly(isoprène), le poly(ε-caprolactone), le poly(tétrahydrofurane) et le poly(acide ricinoléique).

Selon un mode de réalisation, l'invention concerne une composition comprenant une matrice de poly(acide lactique), et au moins un composé répondant à l'une des formules (II), (III), (IV), (V) ou(VI) ou leurs mélanges.

Il est connu que le caractère cassant d'un polymère peut être limité par dispersion d'un polymère souple dans la matrice du polymère à améliorer. Toutefois, il est connu de l'état de la technique que l'incompatibilité de la phase dispersée et de la phase dispersante (matrice) amène le plus souvent à une ségrégation de phase à l'échelle macroscopique qui détériore les propriétés mécaniques du mélange dans le temps.

Ainsi, il a été montré que l'utilisation d'au moins un composé de formule (II), (III), (IV), (V) ou (VI), ou leurs mélanges, dans une matrice de polymère comprenant éventuellement un polymère souple, permet avantageusement d'augmenter le renfort aux chocs de ladite matrice de polymère sans problème d'incompatibilité, et notamment sans problème de ségrégation de phase comme observé en l'absence des composés selon l'invention. Ainsi, les polymères souples sont avantageusement compatibles avec le bloc central des additifs triblocs selon l'invention, tandis que les blocs externes des additifs selon l'invention sont avantageusement compatibles avec la matrice, ce qui permet une stabilisation de l'interface entre la matrice et le polymère souple.

Selon un autre objet, la présente invention concerne l'utilisation des composés de formules (V) et (VI) pour la préparation d'adhésifs, de tensioactifs, de films, d'élastomères thermoplastiques, de peintures ou de fibres.

Il a été mis en évidence dans la présente demande la préparation de pré-polymères (composés (IA) et (I)) avantageusement biosourcés et ayant une fonctionnalité contrôlée.

Il a également été montré leur utilisation pour la préparation d'additifs (composés de formules (II) à (VI)) dans une matrice de polymère, et notamment dans une matrice de poly(acide-lactique), lesdits additifs (composés de formules (II) à (VI)) étant avantageusement issus des bioressources.

L'utilisation des composés de formules (II) à (VI) permet avantageusement d'augmenter le renfort aux chocs d'une matrice polymère de polyester, poly(chlorure de vinyle), polyuréthane, polyamide, poly(acrylate d'alkyle), poly(méthacrylate d'alkyle), polystyrène ou polyoléfine, sans affecter les autres propriétés mécaniques du polymère de ladite matrice. Plus particulièrement, l'utilisation des composés de formules (II) à (VI) selon l'invention permet avantageusement d'augmenter l'élongation à la rupture du polymère de ladite matrice, et permet ainsi de rendre le polymère moins cassant et/ou d'améliorer sa capacité de déformation à chaud et/ou à froid. Ces propriétés sont notamment dues à la présence d'un bloc issu des composés de formule (I) dans la structure des composés de formules (II) à (VI), qui présente avantageusement une faible température de transition vitreuse.

De plus, l'utilisation des composés de formules (II) à (VI) comme additifs à une matrice de polymère de polyester, poly(chlorure de vinyle), polyuréthane, polyamide, poly(acrylate d'alkyle), poly(méthacrylate d'alkyle), polystyrène ou polyoléfine, permet avantageusement d'aider à la nanostructuration du polymère de ladite matrice, et notamment à la cristallisation dudit polymère.

Il a été montré que l'utilisation des pré-polymères de formule (I) pour la préparation d'additifs est intéressante, dans la mesure où lesdits pré-polymères présentent une faible température de transition vitreuse, notamment comprise entre -90°C et -30°C

En particulier, il est connu que le PLA est facilement cassant. Ainsi, l'utilisation de composés de formules (II) à (VI), et notamment de copolymères triblocs, selon l'invention permet avantageusement d'augmenter le renfort aux chocs du PLA, et donc de le rendre moins cassant. En effet, l'incorporation de composés de formule (I) présentant une T_{g} faible, et notamment de poly(acide ricinoléique), dans des copolymères triblocs, permet avantageusement de diminuer sensiblement le caractère cassant du PLA. Ainsi, le PLA casse à des élongations bien plus élevées que sans utilisation des composés de formules (II) à (VII) selon l'invention.

De plus, le renfort aux chocs d'une matrice de polyester, poly(chlorure de vinyle), polyuréthane, polyamide, poly(acrylate d'alkyle), poly(méthacrylate d'alkyle), polystyrène ou polyoléfine, et notamment de PLA, ainsi que l'aide à la nanostructuration ont avantageusement été observés sans problème d'incompatibilité entre la matrice et les additifs, contrairement à ce qui est observé typiquement avec les polymères décrits dans l'état de la technique.

Les exemples suivants permettent d'illustrer la présente invention sans toutefois la limiter.

### Exemples

Figure 1 : Images AFM en mode tapping des échantillons après évaporation rapide de dichlorométhane. (a) copolymère D (b) copolymère C (c) copolymère B (d) copolymère A.
Figure 2 : Images AFM en mode tapping des échantillons après recuit à 115°C pendant 90minutes. (a) copolymère D ; (b) copolymère C ; (c) copolymère B ; (d) copolymère A

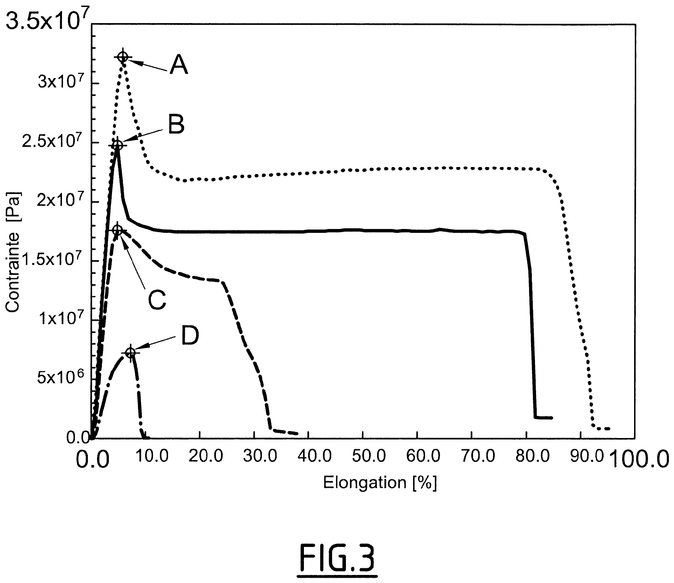

Figure 3 : Courbes contrainte-élongation des échantillons non recuits pour une vitesse de traction de 1 mm/min.

Fournisseurs :
- Ricinoléate de méthyle 85% : ITERG
- L-lactide >98% : TCl
- 1,3-propanediol 99% : Alfa Aesar
- Ti(OBu)₄ 99% : Sigma Aldrich
- Octoate d'étain 95% : Sigma Aldrich

### Exemple 1 : Préparation de copolymères triblocs PLA-polyricinoléate-PLA (5)

### Etape 1 : Préparation du poly(ricinoléate de méthyle) dihydroxytéléchélique (3)

Le poly(ricinoléate de méthyle) dihydroxytéléchélique (3) a été synthétisé par transestérification du ricinoléate de méthyle (1) en présence de 1,3-propanediol ainsi que de Ti(OBu)₄. Le ricinoléate de méthyle (1) utilisé a été préalablement purifié sur colonne chromatographique en utilisant comme éluant un mélange Heptane/Acétone (v/v : 98/2). Le produit (1), après purification, possède une pureté de 99% après analyse par chromatographie en phase gazeuse.
Dans un ballon de 50mL, 5g de ricinoléate de méthyle (1), 73mg de 1,3-propanediol (2) ainsi que 54mg de Ti(OBu)₄ ont été introduits. Le mélange réactionnel a été laissé sous agitation à 140°C pendant 2 heures sous flux de N₂. La température a ensuite été élevée à 180°C pendant une heure puis le ballon a été placé sous vide dynamique pendant 21 heures à 180°C. A la fin de la réaction, le polymère a été dissous dans du dichlorométhane puis précipité dans du méthanol et enfin séché sous pression réduite jusqu'à stabilisation de la masse.
¹H-NMR (400 MHz, CDCl₃, δ): 0.87 (m, -CH₂-CH₃), 1.30 (m, -[*CH₂*]-), 1.56 (m,), 2.00 (m,), 2.26 (m,), 3.61 (m, -CH₂-*CH*-OH), 4.14 (t, -COO-*CH*₂-CH₂-), 4.88 (m, -CH₂-*CH*-OCO-), 5.33 (m, -CH₂-*CH*=CH-CH₂), 5.39 (m, -CH₂-*CH*=CH-CH₂), 5.44 (m, -CH₂-CH=*CH*-CH₂), 5.54 (m, -CH₂-CH=*CH*-CH₂).

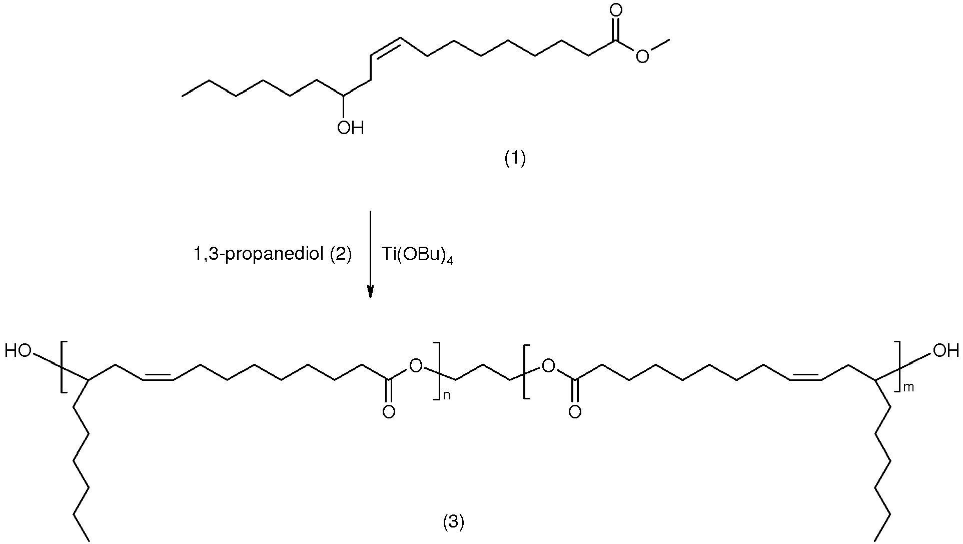

### Etape 2 : Préparation du copolymère (5)

Le L-lactide (4), préalablement recristallisé dans du toluène, a été introduit dans un ballon tricol puis séché sous vide dynamique pendant 12h. Parallèlement le composé (3) préalablement préparé a également été séché sous vide dynamique à 70°C pendant 12h. Du toluène anhydre a ensuite été ajouté au ballon contenant le macro-amorceur ainsi que dans le ballon contenant le composé (4). Le catalyseur, l'octoate d'étain, a été ajouté à la solution du composé (3) puis le mélange a été laissé sous agitation pendant 1 heure. Cette solution a ensuite été ajoutée à la solution de L-lactide (4) puis le mélange réactionnel a agité vigoureusement sous reflux à 140°C pendant 4 heures. Le toluène a ensuite été retiré sous vide dynamique, puis le polymère (5) a été dissous dans du dichlorométhane, précipité dans du méthanol puis séché sous pression réduite.
¹H-NMR (400 MHz, CDCl₃, δ): 0.88 (m, -CH₂-C*H*₃), 1.30 (m, *-*[*CH₂*]*-*)*,* 1.54 (m,), 2.00 (m,), 2.26 (m,), , 4.14 (t, -COO-C*H*₂-CH₂-), 4.35 (m, OH-CH-(C*H*₃)-COO-) 4.88 (m, -CH₂-*CH*-OCO-), 5.17 (q, -CH-(C*H*₃)-COO-)5.33 (m, -CH₂-*CH*=CH-CH₂), 5.39 (m, -CH₂-*CH*=CH-CH₂), 5.44 (m, -CH₂-CH=*CH*-CH₂), 5.54 (m, -CH₂-CH=*CH*-CH₂).

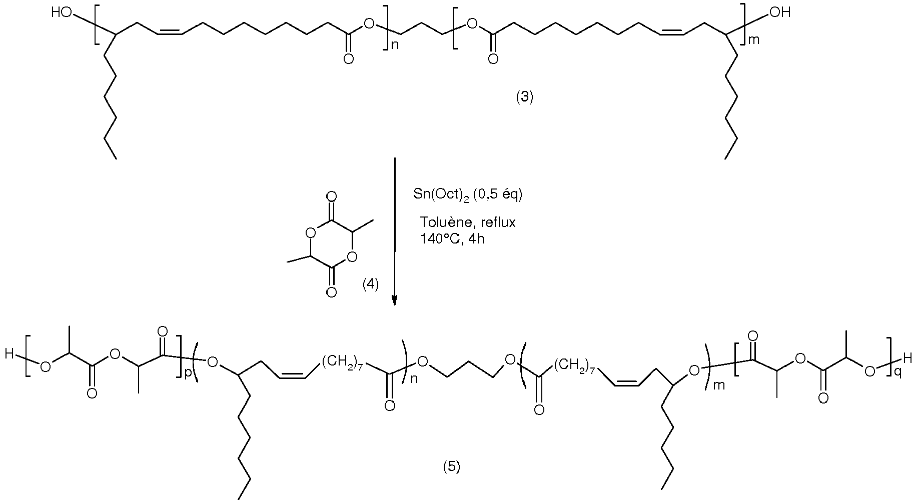

En faisant varier la quantité de matière du L-lactide (4) par rapport au composé (3), on obtient des copolymères triblocs de différentes compositions.

**Tableau 1 : Caractéristiques de différents copolymères (5)**

| Copolymère | [(4)]₀/[(3)]₀ | W_{PLLA} théo | W_{PLLA}^{a} | Conversion^{a} (%) | Mn^{a} (kg/mol) | PDI^{b} | Tg(Pric)^{c} (°C) | Tg (PLA)^{c} (°C) | Tf (PLA)^{c} (°C) | ΔHf^{c} (J/g) | Xc^{c} (%) |
|---|---|---|---|---|---|---|---|---|---|---|---|
| A | 429/1 | 0.90 | 0.83 | 90 | 61 | 1.2 | -77 | 54 | 179 | 56 | 66 |
| B | 194/1 | 0.80 | 0.71 | 90 | 49 | 1.3 | -75 | 60 | 170 | 37 | 56 |
| C | 113/1 | 0.70 | 0.63 | 92 | 31 | 1.3 | -70 | 50 | 167 | 35 | 60 |
| D | 73/1 | 0.60 | 0.53 | 86 | 28 | 1.2 | -70 | 56 | 160 | 28 | 57 |

| | | | | | | | | | | | |
|---|---|---|---|---|---|---|---|---|---|---|---|
| (a) Déterminé par ¹H RMN (b) Déterminé par SEC dans le THF, calibration PS (c) DSC, 10°C/min | | | | | | | | | | | |

- W_{PLLA,} : pourcentage massique des blocs PLLA issu du composé (4) dans le copolymère ;
- Tg : température de transition vitreuse du bloc poly(ricinoléate de méthyle) ou PLLA dans le copolymère ;
- Tf : température de fusion des blocs PLLA dans le copolymère ;
- ΔHf : enthalpie de fusion des blocs PLLA dans le copolymère ;
- Xc : taux de cristallinité des blocs PLLA dans le copolymère.

La structure tribloc des copolymères a été confirmée par RMN ¹H et par DSC. En effet, par RMN ¹H, le déplacement des pics des protons allyliques de l'unité terminale du composé (3) se trouve à 5,4 ppm. La disparition du pic à 3,55ppm du proton situé sur le carbone porteur de la fonction hydroxyle a également été observée, ce qui permet de confirmer que l'amorçage de la polymérisation du L-lactide (4) a bien été réalisé par les fonctions hydroxyle du composé (3).

Des analyses par DSC ont également permis de confirmer la structure « à blocs » des copolymères du fait de la présence de deux Tg, une à -70°C correspondant au bloc poly(ricinoléate de méthyle) (issu du composé 3) et une autre à 50°C correspondant aux deux blocs PLLA (issu du composé 4). Par ailleurs, la température de fusion du copolymère tribloc (5) est semblable à celle du PLA seul à savoir environ 180°C. Cela confirme également la structure « à blocs » du copolymère. En effet une répartition statistique des unités ricinoléate dans le polymère aurait conduit à une diminution significative de la température de fusion.

Au vu du tableau ci-dessus, il a été constaté que le taux de cristallinité des copolymères augmente légèrement avec la taille des blocs PLLA.

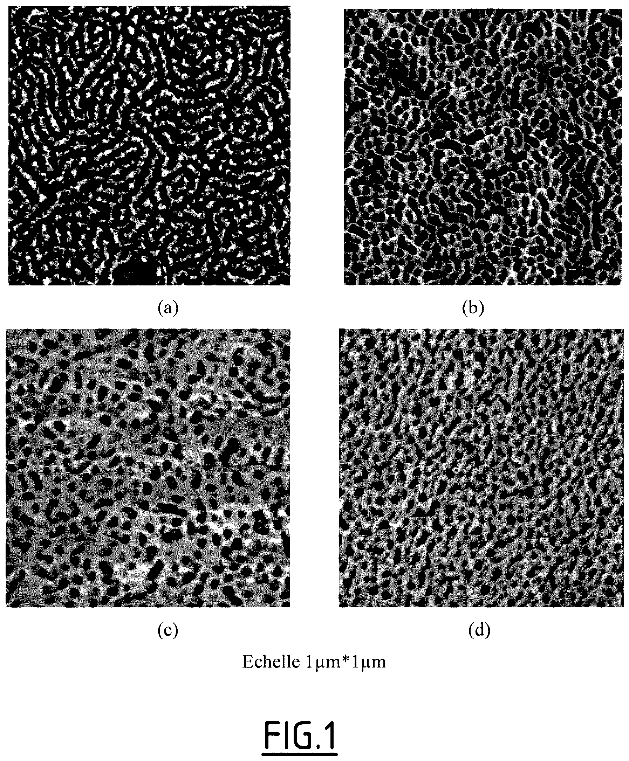

Une analyse des films des copolymères par AFM a permis de noter une ségrégation de phase importante du fait de l'incompatibilité des blocs PLA (issus du composé 4) et poly(ricinoléate de méthyle) (issus du composé 3). Ainsi en fonction de la composition du copolymère, différentes morphologies peuvent être obtenues lorsque les matériaux ne sont pas recuits (Figure 1).

Les polymères à blocs ont été mis en solution dans le dichlorométhane puis déposés par spin-coating sur des wafers de silicium. Les films ont ensuite été analysés par microscopie à force atomique (AFM) et les images ont révélé des nano-organisations en lamelles, cylindres ou sphères en fonction de la proportion entre les différents blocs.
Cependant, lorsqu'un recuit du matériau est effectué à 115°C après passage à l'état fondu, la cristallisation des blocs PLA entraîne une désorganisation à l'échelle nanoscopique. On aperçoit alors la formation de sphérolites dont la structure interne est perturbée par la présence du bloc amorphe poly(ricinoléate de méthyle).

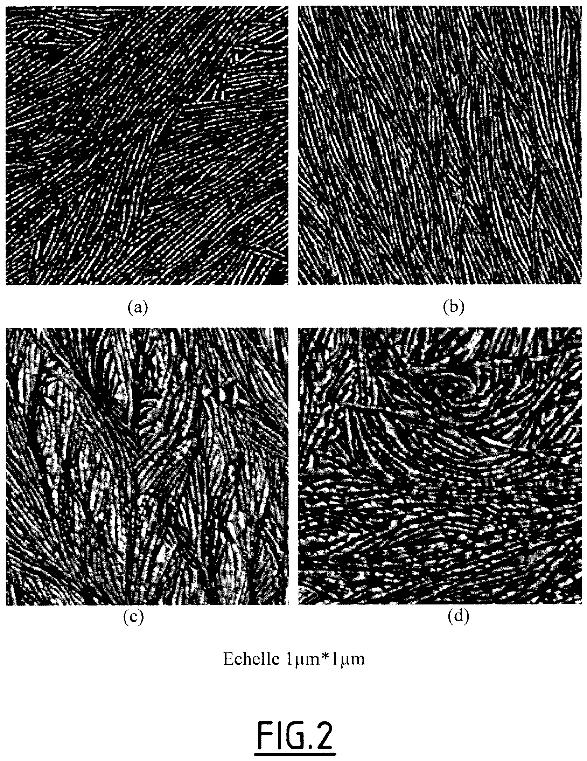

Au vu des images AFM obtenues à partir des films recuits (Figure 2), il apparaît que la cristallisation des blocs PLA force la ségrégation du bloc poly(ricinoléate de méthyle) amorphe dans les régions interlamellaires du polymère cristallisé. On distingue une augmentation de la taille des lamelles cristallines avec une augmentation de la taille des blocs PLA dans la structure du copolymère. On remarque également que la cristallinité possède une importante influence sur l'orientation des lamelles cristallines. En effet une proportion importante de bloc amorphe poly(ricinoléate de méthyle) induit une nette orientation des lamelles dans une direction de l'espace alors que l'augmentation de la taille des blocs PLA par rapport au poly(ricinoléate de méthyle) entraîne la formation de « terrasses » caractéristiques d'une forte cristallisation.
La structure des sphérolites a également été étudiée par microscopie optique. Une nette diminution du diamètre des sphérolites est observée lorsque le pourcentage en PLA est augmenté. Cela signifie que les germes cristallins sont plus nombreux et donc que le matériau possède une cristallinité plus importante.

Enfin des essais mécaniques ont été réalisés sur les films de copolymères (sans recuit) afin d'évaluer l'augmentation de l'élongation à la rupture générée par la présence du bloc poly(ricinoléate de méthyle) (issu du composé 3) sachant que le PLLA seul présente une élongation à la rupture comprise entre 3 et 7%.
Les copolymères présentant 17% et 29% de poly(acide ricinoléique) cassent pour des élongations respectives de 98% et 95%. Cette stratégie visant à limiter le caractère cassant du PLLA par incorporation de segments souples de faible Tg a donc pu être validée par les essais mécaniques.

### Exemple 2 : Préparation de polyricinoléate de polypropylène glycol (7)

Les esters méthyliques de ricin (6) (1 éq.), le polypropylène glycol (PPG) (0,1 à 0,2 éq.), le catalyseur Ti(BuO)₄ ont été chargés dans le réacteur. Le milieu a été chauffé lentement sous vide jusqu'à atteindre les conditions opératoires désirées (T : 200°C, P : 6 à 20 mbar). Le milieu réactionnel a été maintenu dans ces conditions pendant 6h à 10h. En fin de réaction, le milieu a été refroidi puis le vide a été cassé pour donner un produit orange limpide qui n'a subit aucun post-traitment. 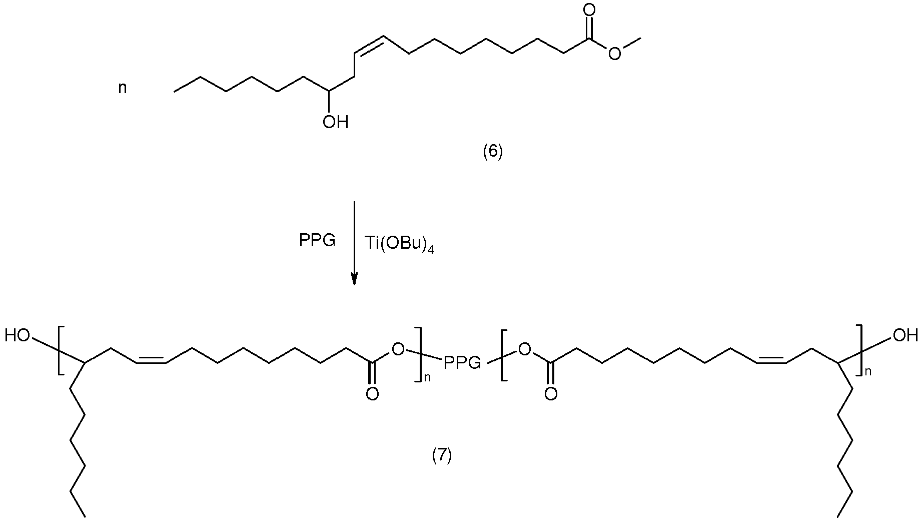 da ns lequel PPG correspond à un radical issu du poly(propylène glycol) dénué de fonctions terminales.

**Tableau 2 : Différents polymères (7) selon les conditions opératoires**

| **copolymère** | 7a | 7b | 7c | 7d |
|---|---|---|---|---|
| **catalyseur (% molaire de Ti(BuO)₄ par rapport (6))** | 0,1 | 0,1 | 0,05 | 0,05 |
| **ratio molaire de PPG par rapport (6)** | 0,1n | 0,2n | 0,1n | 0,2n |
| **T(°C) finale** | 200 | 200 | 200 | 200 |
| **P(mbar) finale** | 12 | 6 | 15 | 11 |
| **temps (h)** | 6 | 6 | 10 | 10 |
| **IA (mg KOH/g)^{a}** | 0,14 | 0,11 | 0,12 | 0,11 |
| **IOH (mg KOH/g)^{b}** | 28,7 | 59,7 | 40,7 | 59,3 |

| | | | | |
|---|---|---|---|---|
| (a) Indice d'acidité (b) indice d'hydroxyle | | | | |

### Exemple 3 : Préparation de polyricinoléate de Pripol® (9)

Le polyricinoléate a été synthétisé selon le mode opératoire de l'exemple 2, et selon les conditions spécifiques du tableau 3 suivant. 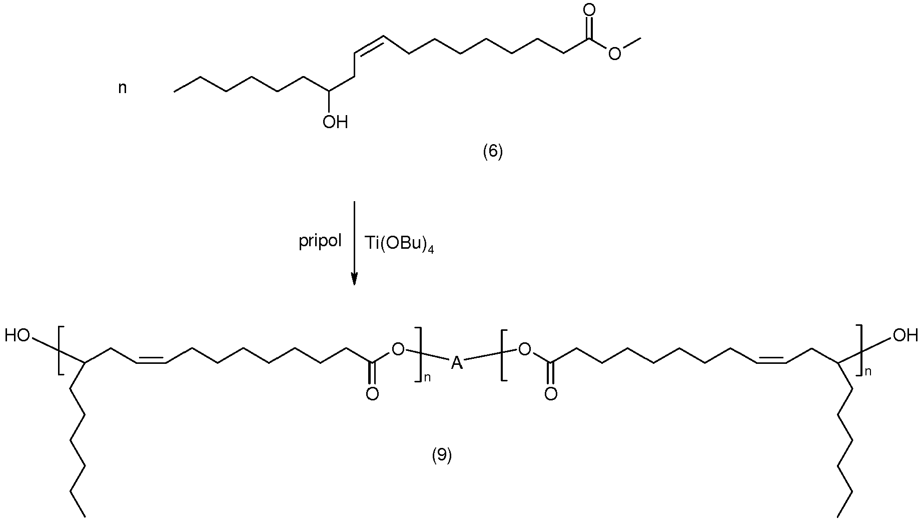 avec A correspondant au radical issu du pripol dénué de fonctions OH terminales.

### En particulier, A représente le groupe suivant :

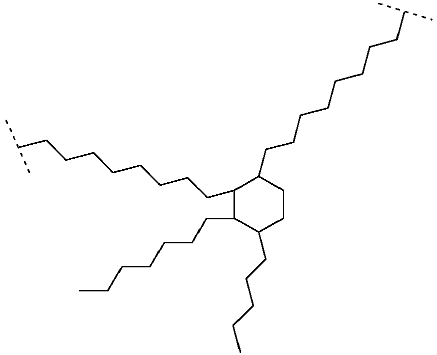

**Tableau 3 : Différents polymères (9) selon les conditions opératoires**

| **copolymère** | 9a | 9b | 9c | 9d |
|---|---|---|---|---|
| **catalyseur (% molaire de Ti(BuO)₄ par rapport (6))** | 0,05 | 0,05 | 0,05 | 0,05 |
| **ratio molaire de PPG par rapport (6)** | 0,1n | 0,2n | 0,3n | 0,4n |
| **T(°C) finale** | 200 | 200 | 200 | 200 |
| **P(mbar) finale** | 10 | 16 | 16 | 15 |
| **temps (h)** | 3 | 3 | 3 | 3 |
| **IA (mg KOH/g)^{a}** | 0,22 | 0,48 | 0,60 | 0,44 |
| **IOH (mg KOH/g)** | 26,8 | 63,1 | 76,9 | 91,0 |

| | | | | |
|---|---|---|---|---|
| (a) Indice d'acidité (b) indice d'hydroxyle | | | | |

### Exemple 4 : Etude de mélange ternaire

Un mélange ternaire PLA/Poly(acide ricinoléique)/Copolymère tribloc (5) a été réalisé et étudié.

Des mélanges binaires : PLA/Poly(acide ricinoléique) ont également été réalisés en utilisant une mini-extrudeuse.

Des essais de traction à une vitesse de 10mm/min ont tout d'abord été réalisés sur les mélanges binaires en faisant varier le pourcentage de poly(acide ricinoléique) dans le mélange.

Il a été remarqué que l'augmentation du pourcentage de poly(acide ricinoléique) dans le mélange entraîne une augmentation significative de l'élongation à la rupture. Il a également été remarqué l'instabilité du mélange binaire dans le temps

Il a été montré qu'un mélange ternaire PLA/Poly(acide ricinoléique)/Copolymère tribloc **(5) :** 90-5-5 présente une élongation à la rupture de 190% alors qu'un mélange binaire PLA-PRic :95-5 casse à 25%. La présence du copolymère à l'interface semble donc avoir une forte influence sur les propriétés mécaniques du mélange.

## Revendications

1. Utilisation d'un composé de formule (I) suivante : 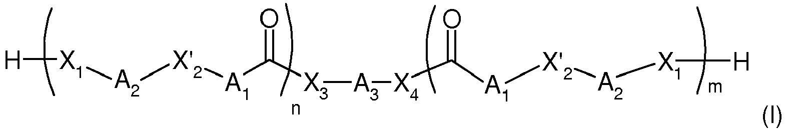 dans laquelle :
- A₁ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- A₂ représente un radical alkylène divalent, linéaire ou ramifié, comprenant de 2 à 20 atomes de carbone, de préférence de 2 à 12, et préférentiellement de 2 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- A₃ est choisi dans le groupe constitué des radicaux divalents suivants :
∘ un alkylène linéaire ou ramifié, comprenant de 2 à 600 atomes de carbone, de préférence de 2 à 400, et préférentiellement de 2 à 100, ledit radical comprenant éventuellement une ou plusieurs insaturations, étant éventuellement interrompu par au moins un hétéroatome choisi parmi O, N et S, et étant éventuellement substitué par au moins un substituant -OAlk, Alk représentant un groupe alkyle comprenant de 1 à 10 atomes de carbone ; et
∘ un arylène comprenant de 6 à 30 atomes de carbone, ledit radical étant éventuellement substitué par au moins un substituant -OAlk, Alk représentant un groupe alkyle comprenant de 1 à 10 atomes de carbone ;
- X₁, X₃ et X₄, identiques ou différents, représentent indépendamment les uns des autres, -O- ou -NH- ;
- X'₂ est choisi dans le groupe constitué de : -S-, -CH₂- ou une liaison ; et
- n et m représentent, indépendamment l'un de l'autre, un nombre entier compris de 1 à 1000, de préférence de 1 à 100, et préférentiellement de 1 à 50 ;
à condition que le nombre total d'atomes de carbone des radicaux A₁, A₂ et X'₂ soit supérieur ou égal à 8, de préférence supérieur ou égal à 10 ;
pour la préparation d'additifs dans une matrice de polyester, poly(chlorure de vinyle), polyuréthane, polyamide, poly(acrylate d'alkyle), poly(méthacrylate d'alkyle), polystyrène ou polyoléfine.

2. Utilisation selon la revendication 1, pour améliorer le renfort aux chocs d'une matrice de polyester, poly(chlorure de vinyle), polyuréthane, polyamide, poly(acrylate d'alkyle), poly(méthacrylate d'alkyle), polystyrène ou polyoléfine, et/ou pour aider à la nanostructuration de ladite matrice, et de préférence la matrice est une matrice de poly(acide lactique).

3. Utilisation selon l'une quelconque des revendications 1 ou 2, dans laquelle les additifs sont choisis dans le groupe constitué des composés de formules (II), (III), (IV), (V) et (VI) suivantes : 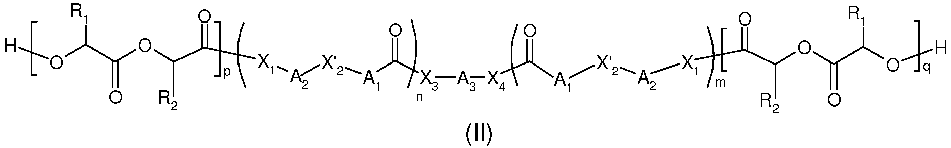 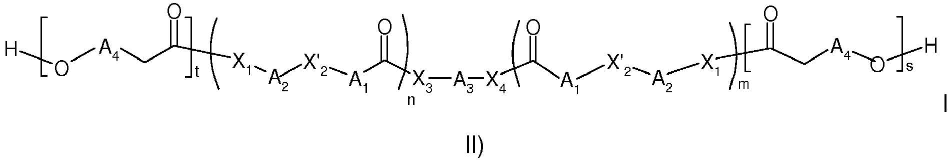 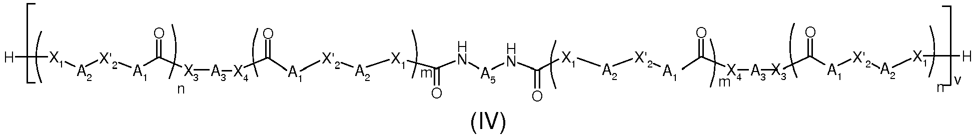 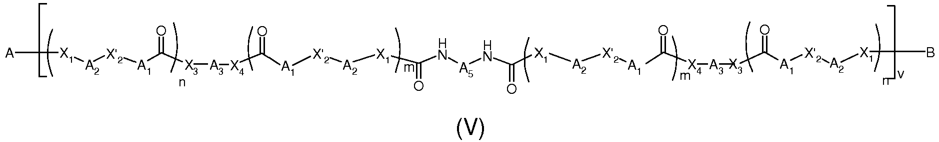 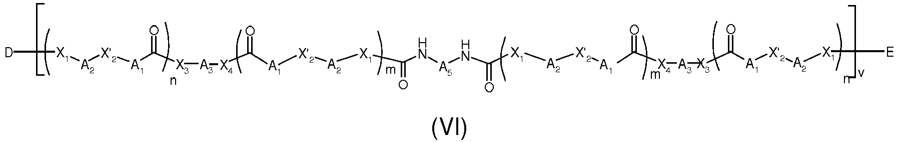 dans lesquelles :
- X₁, X'₂, X₃, X₄, A₁, A₂, A₃, n et m sont tels que définis dans la revendication 1 ;
- R₁ et R₂ représentent, indépendamment l'un de l'autre, H ou un groupe alkyle, linéaire ou ramifié, comprenant de 1 à 20 atomes de carbone, de préférence de 1 à 12, et préférentiellement de 1 à 10, ledit groupe alkyle pouvant éventuellement comprendre au moins une double liaison ou une triple liaison ;
- A₄ représente un radical alkylène divalent, linéaire ou ramifié, comprenant de 1 à 20 atomes de carbone, de préférence de 2 à 6, ledit radical comprenant éventuellement au moins une insaturation ;
- A₅ est choisi dans le groupe constitué des radicaux :
∘ alkylène, linéaire ou ramifié, comprenant de 1 à 20 atomes de carbone, de préférence de 2 à 12, ledit radical comprenant éventuellement au moins une insaturation ;
∘ arylène comprenant de 6 à 20 atomes de carbone, de préférence de 6 à 12, ledit radical arylène étant éventuellement substitué ;
∘ cycloalkylène, comprenant de 3 à 20 atomes de carbone, de préférence de 5 à 10, ledit radical cycloalkylène étant éventuellement substitué ;
∘ cycloalkylène-alkylène-cycloalkylène comprenant de 6 à 30 atomes de carbone ; et
∘ alkylène-cycloalkylène comprenant de 4 à 15 atomes de carbone ;
- v représente un nombre entier compris de 1 à 5000, de préférence de 1 à 1000, et préférentiellement de 2 à 500 ;
- A et B représentent les radicaux suivants : 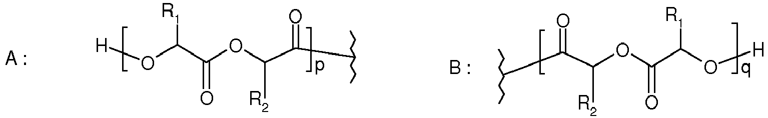
- D et E représentent les radicaux suivants : 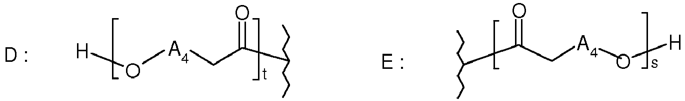
- p et q représentent, indépendamment l'un de l'autre, un nombre entier compris de 1 à 5000, de préférence de 1 à 1000, et préférentiellement de 2à500;
- t et s représentent, indépendamment l'un de l'autre, un nombre entier compris de 1 à 5000, de préférence de 1 à 1000, et préférentiellement de 2 à 500.

4. Composés de formule (IA) suivante : 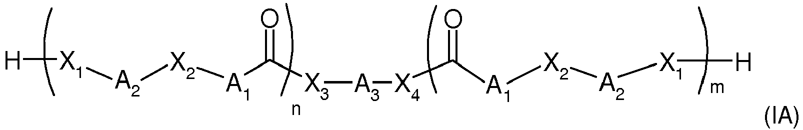 dans laquelle :
- X₁, X₃, X₄, A₁, A₂, A₃, n et m sont tels que définis dans la revendication 1;
- X₂ représente -CH₂- ou une liaison ; et
à condition que le nombre d'atomes de carbone total des radicaux A₁, A₂ et X₂ soit supérieur ou égal à 8, de préférence supérieur ou égal à 10 ;
à l'exception des composés de formule suivante :

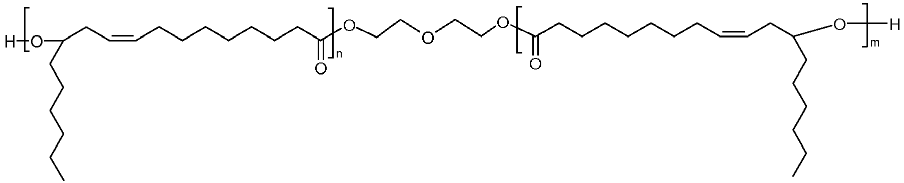

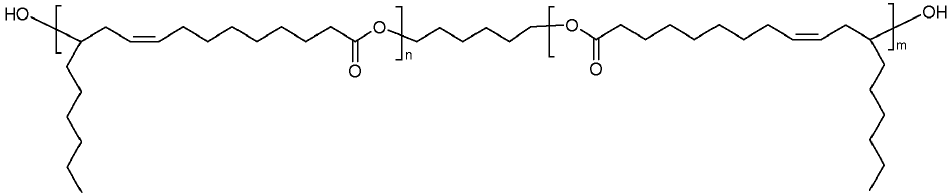

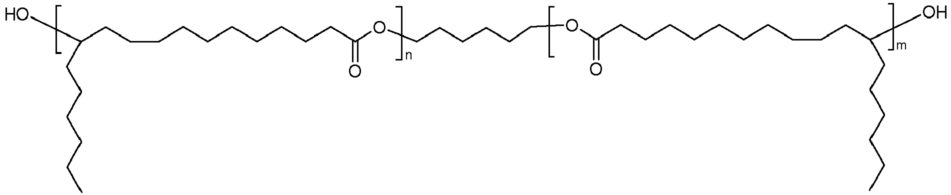

5. Composé de formule (II) suivante : 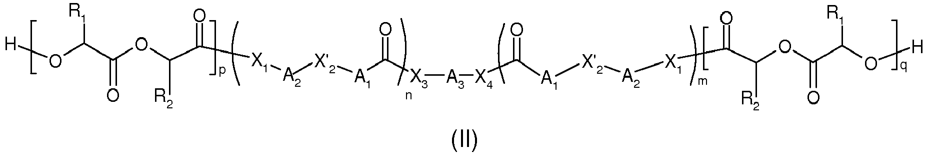 dans laquelle :
- X₁, X'₂, X₃, X₄, A₁, A₂, A₃, n et m sont tels que définis dans la revendication 1 ;
- R₁, R₂, p et q sont tels que définis dans la revendication 3.

6. Composés de formule (III) suivante : 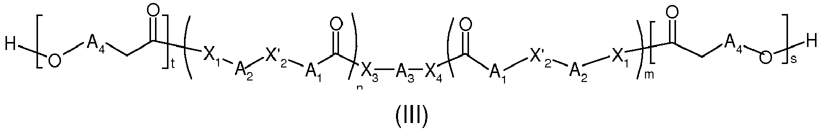 dans laquelle :
- X₁, X'₂, X₃, X₄, A₁, A₂, A₃, n et m sont tels que définis dans la revendication 1 ; et
- A₄, t et s sont tels que définis dans la revendication 3.

7. Composé de formule (IV) suivante : 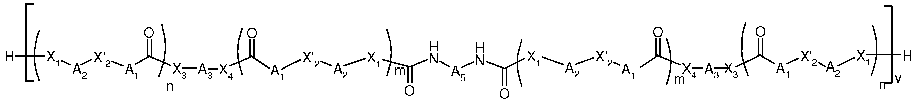 dans laquelle :
- X₁, X₃, X₄, X'₂, A₁, A₂, A₃, n, v et m sont tels que définis dans la revendication 1 ; et
- A₄, A₅ et v sont tels que définis dans la revendication 3.

8. Composé de formule (V) suivante : 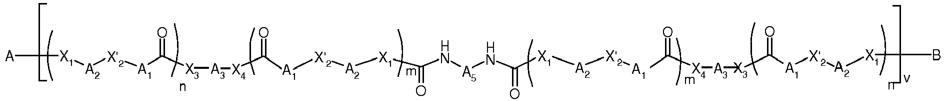 dans laquelle :
- X₁, X'₂, X₃, X₄, A₁, A₂, A₃, n et m sont tels que définis dans la revendication 1;
- A, B, A₅, v, p et q ont tels que définis dans la revendication 3.

9. Composé de formule (VI) suivante : 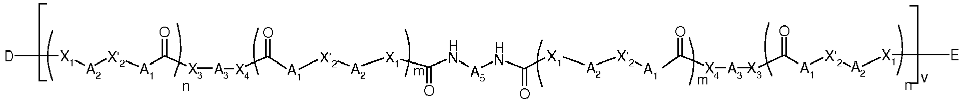 dans laquelle :
- X₁, X'₂, X₃, X₄, A₁, A₂, A₃, n, et m sont tels que définis dans la revendication 1;
- D, E, A₅, v, s, t sont tels que définis dans la revendication 3.

10. Utilisation de composés de formules (IV), (V) ou (VI) selon l'une quelconque des revendications 7 à 9, pour la préparation d'adhésifs, de tensioactifs, de films, d'élastomères thermoplastiques, de peintures ou de fibres.

11. Composition comprenant une matrice de polyester, poly(chlorure de vinyle), polyuréthane, polyamide, poly(acrylate d'alkyle), poly(méthacrylate d'alkyle), polystyrène ou polyoléfine, et au moins un composé de formules (II), (III), (IV), (V) ou (VI) telles que définies dans la revendication 3, ou leurs mélanges, et éventuellement au moins un autre polymère notamment choisi parmi le poly(butadiène), le poly(isoprène), le poly(ε-caprolactone), le poly(tétrahydrofurane) et le poly(acide ricinoléique).

## Patentansprüche

1. Verwendung einer Verbindung der folgenden Formel (I): 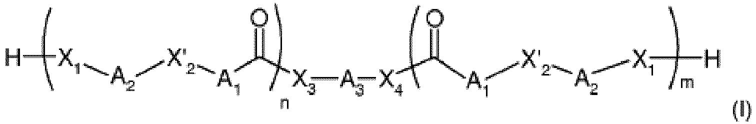 wobei:
- A₁ einen zweiwertigen, linearen oder verzweigten Alkylenrest mit 2 bis 20 Kohlenstoffatomen, vorzugsweise 5 bis 18, noch bevorzugter 6 bis 17 darstellt, wobei der Rest gegebenenfalls eine oder mehrere Unsättigungen aufweist und gegebenenfalls durch mindestens einen Substituent -OAlk substituiert ist, wobei Alk eine Alkylgruppe mit 1 bis 10 Kohlenstoffatomen darstellt;
- A₂ einen zweiwertigen, linearen oder verzweigten Alkylenrest mit 2 bis 20 Kohlenstoffatomen, vorzugsweise 2 bis 12, und noch bevorzugter 2 bis 10 darstellt, wobei der Rest gegebenenfalls eine oder mehrere Unsättigungen aufweist und gegebenenfalls durch mindestens einen Substituent -OAlk substituiert ist, wobei Alk eine Alkylgruppe mit 1 bis 10 Kohlenstoffatomen darstellt;
- A₃ ausgewählt ist aus der Gruppe bestehend aus den folgenden zweiwertigen Resten:
• einem linearen oder verzweigten Alkylen-Rest mit 2 bis 600 Kohlenstoffatomen, vorzugsweise 2 bis 400, und noch bevorzugter 2 bis 100, wobei der Rest gegebenenfalls eine oder mehrere Unsättigungen aufweist, der gegebenenfalls mindestens ein Heteroatom ausgewählt aus O, N und S aufweist und gegebenenfalls durch mindestens einen Substituent -OAlk substituiert ist, wobei Alk eine Alkylgruppe mit 1 bis 10 Kohlenstoffatomen darstellt; und
• einem Arylen-Rest mit 6 bis 30 Kohlenstoffatomen, wobei der Rest gegebenenfalls durch mindestens einen Substituent -OAlk substituiert ist, wobei Alk eine Alkylgruppe mit 1 bis 10 Kohlenstoffatomen darstellt;
- X₁, X₃ und X₄, gleich oder verschieden, unabhängig voneinander, -O- oder -NHdarstellen;
- X'₂ ausgewählt ist aus der Gruppe bestehend aus -S-, -CH₂ oder einer Bindung; und
- n und m, unabhängig voneinander, eine ganze Zahl von 1 bis 1000, vorzugsweise von 1 bis 100 und vorzugsweise von 1 bis 50 darstellt;
vorausgesetzt, dass die Gesamtzahl der Kohlenstoffatome der A₁-, A₂- und X'₂-Resten größer als oder gleich 8 ist, vorzugsweise größer als oder gleich 10;
zur Herstellung von Additiven für eine Matrix aus Polyester, Polyvinylchlorid, Polyurethan, Polyamid, Polyalkylacrylat, Polyalkylmethacrylat, Polystyrol oder Polyolefin.

2. Verwendung nach Anspruch 1, zur Verbesserung der Stoßfestigkeit einer Matrix, wobei die Matrix aus Polyester, Polyvinylchlorid, Polyurethan, Polyamid, Polyalkylacrylat, Polyalkylmethacrylat, Polystyrol oder Polyolefin ist, und / oder zur Unterstützung der Nanostrukturierung der Matrix, und wobei die Matrix vorzugsweise eine Matrix aus Polymilchsäure ist.

3. Verwendung nach einem der Ansprüche 1 oder 2, wobei die Additive ausgewählt sind aus der Gruppe bestehend aus den Verbindungen der folgenden Formeln (II), (III), (IV), (V) und (VI): 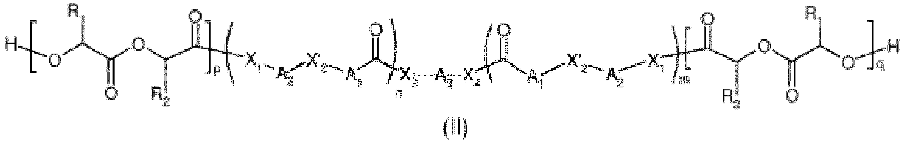 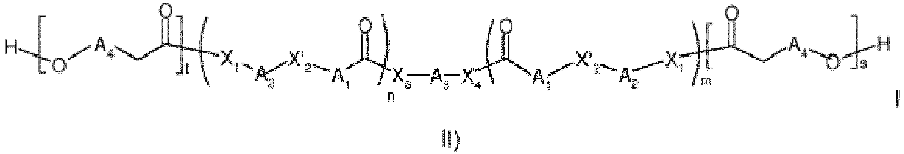 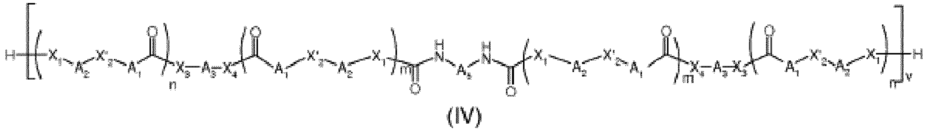 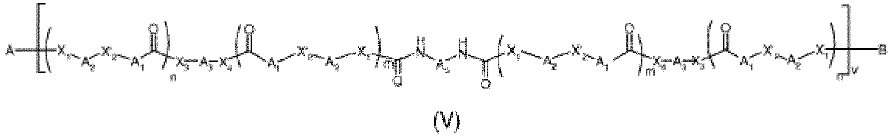 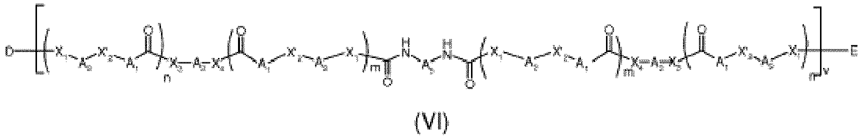 wobei:
- X₁, X'₂, X₃, X₄, A₁, A₂, A₃, n und m wie in Anspruch 1 definiert sind;
- R₁ und R₂, unabhängig voneinander, H oder eine lineare oder verzweigte Alkyl-Gruppe mit 1 bis 20 Kohlenstoffatomen, vorzugsweise 1 bis 12, und noch bevorzugter von 1 bis 10 darstellen, wobei die Alkyl-Gruppe gegebenenfalls mindestens eine Doppelbindung bzw. Dreifachbindung aufweist;
- A₄ einen zweiwertigen, linearen oder verzweigten Alkylen-Rest mit 1 bis 20 Kohlenstoffatomen, vorzugsweise 2 bis 6 darstellt, wobei der Rest gegebenenfalls mindestens eine Unsättigung aufweist;
- A₅ ausgewählt ist aus der Gruppe bestehend aus den Resten:
• einem linearen oder verzweigten Alkylen-Rest mit 1 bis 20 Kohlenstoffatomen, vorzugsweise 2 bis 12, wobei der Rest gegebenenfalls mindestens eine Unsättigung aufweist;
• einem Arylen-Rest mit 6 bis 20 Kohlenstoffatomen, vorzugsweise 6 bis 12, wobei der Arylen-Rest gegebenenfalls substituiert ist;
• einem Cycloalkylen-Rest mit 3 bis 20 Kohlenstoffatomen, vorzugsweise 5 bis 10, wobei der Cycloalkylen-Rest gegebenenfalls substituiert ist;
• einem Cycloalkylen-Alkylen-Cycloalkylen-Rest mit 6 bis 30 Kohlenstoffatomen; und
• einem Alkylen-Cycloalkylen-Rest mit 4 bis 15 Kohlenstoffatomen;
- v eine ganze Zahl von 1 bis 5000, vorzugsweise von 1 bis 1000 und vorzugsweise von 2 bis 500 darstellt;
- A und B die folgenden Reste darstellen: 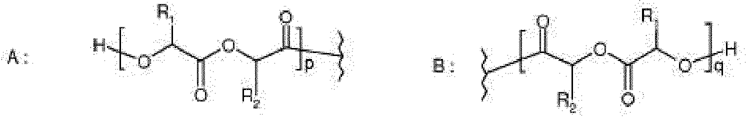
- D und E die folgenden Reste darstellen: 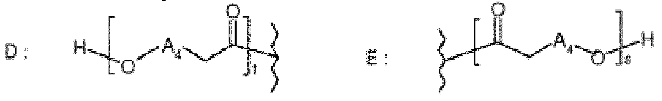
- p und q, unabhängig voneinander, eine ganze Zahl von 1 bis 5000, vorzugsweise von 1 bis 1000 und vorzugsweise von 2 bis 500 darstellen;
- t und s, unabhängig voneinander, eine ganze Zahl von 1 bis 5000, vorzugsweise von 1 bis 1000 und vorzugsweise von 2 bis 500 darstellen.

4. Verbindungen der folgenden Formel (IA) 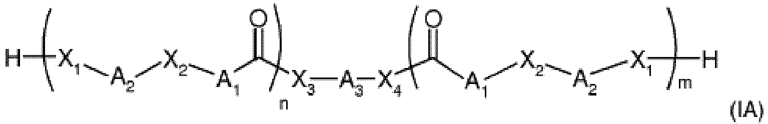 wobei:
- X₁, X₃, X₄, A₁, A₂, A₃, n und m wie in Anspruch 1 definiert sind;
- X₂ -CH₂ oder eine Bindung darstellt; und
vorausgesetzt, dass die Gesamtzahl der Kohlenstoffatom von A₁-, A₂- und X₂-Resten größer als oder gleich 8 ist, vorzugsweise größer als oder gleich 10;
ausgenommen die Verbindungen der folgenden Formeln:

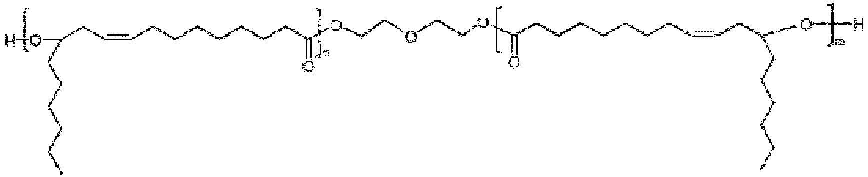

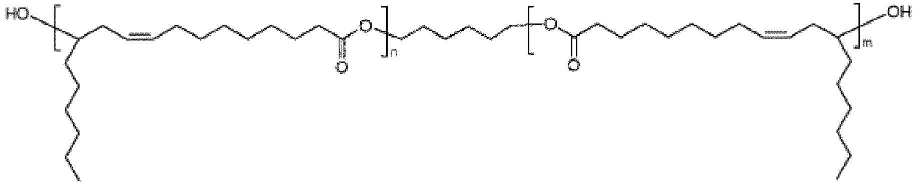

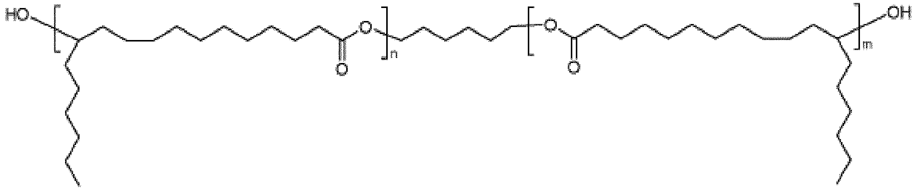

5. Verbindung der folgenden Formel (II): 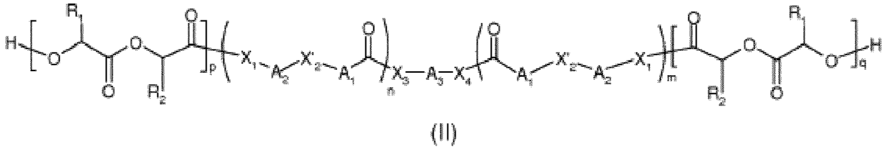 wobei:
- X₁, X'₂, X₃, X₄, A₁, A₂, A₃, n und m wie in Anspruch 1 definiert sind;
- R₁, R₂, p und q wie in Anspruch 3 definiert sind.

6. Verbindungen der folgenden Formel (III): 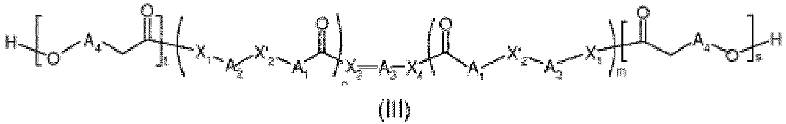 wobei:
- X₁, X'₂, X₃, X₄, A₁, A₂, A₃, n und m wie in Anspruch 1 definiert sind; und
- A₄, t und s wie in Anspruch 3 definiert sind.

7. Verbindung der folgenden Formel (IV): 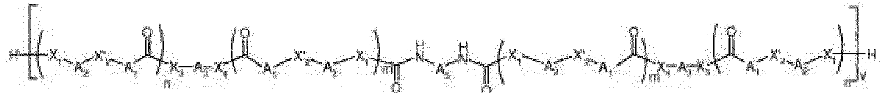 wobei:
- X₁, X₃, X₄, X'₂, A₁, A₂, A₃, n, v und m wie in Anspruch 1 definiert sind; und
- A₄, A₅ und v wie in Anspruch 3 definiert sind.

8. Verbindung der folgenden Formel (V): 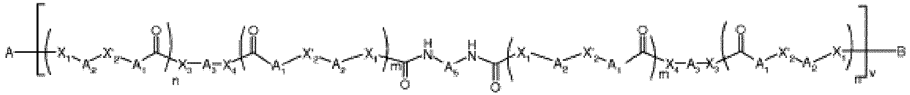 wobei:
- X₁, X'₂, X₃, X₄, A₁, A₂, A₃, n und m wie in Anspruch 1 definiert sind; und
- A, B, A₅, v, p und q wie in Anspruch 3 definiert sind.

9. Verbindung der folgenden Formel (VI): 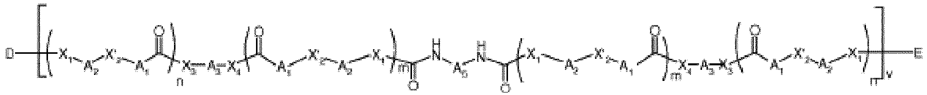 wobei:
- X₁, X'₂, X₃, X₄, A₁, A₂, A₃, n und m wie in Anspruch 1 definiert sind; und
- D, E, A₅, v, s,t wie in Anspruch 3 definiert sind.

10. Verwendung von Verbindungen der Formeln (IV), (V) oder (VI) nach einem der Ansprüche 7 bis 9 zur Herstellung von Klebstoffen, Tensiden, Folien, thermoplastischen Elastomeren, Farben oder Fasern.

11. Zusammensetzung aufweisend eine Matrix aus Polyester, Polyvinylchlorid, Polyurethan, Polyamid, Polyalkylacrylat, Polyalkylmethacrylat, Polystyrol oder Polyolefin und mindestens eine wie in Anspruch 3 definierte Verbindung der Formeln (II), (III), (IV), (V) oder (VI), oder Mischungen davon, und gegebenenfalls mindestens einem anderen Polymer ausgewählt aus Polybutadien, Polyisopren, Poly(ε-caprolacton), Polytetrahydrofuran und Polyricinolsäure.

## Claims

1. The use of a compound having the following formula (I): 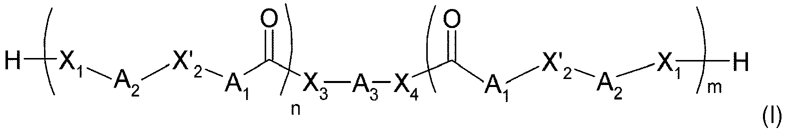 in which:
- A₁ represents a divalent alkylene radical, which is linear or branched, comprising from 2 to 20 carbon atoms, preferably from 5 to 18, and preferably from 6 to 17, the said radical possibly comprising one or more unsaturations, and being possibly substituted by at least one substituent - OAlk, Alk representing an alkyl group comprising from 1 to 10 carbon atoms;
- A₂ represents a divalent alkylene radical, which is linear or branched, comprising from 2 to 20 carbon atoms, preferably from 2 to 12, and preferentially from 2 to 10, the said radical possibly comprising one or more unsaturations, and being possibly substituted by at least one substituent - OAlk, Alk representing an alkyl group comprising from 1 to 10 carbon atoms;
- A₃ is selected from the group consisting of the following divalent radicals:
∘ a linear or branched alkylene, comprising from 2 to 600 carbon atoms, preferably from 2 to 400, and preferentially from 2 to 100, the said radical possibly comprising one or more unsaturations, being possibly interrupted by at least one heteroatom selected from O, N and S, and being possibly substituted by at least one substituent -OAlk, Alk representing an alkyl group comprising from 1 to 10 carbon atoms; and
∘ an arylene comprising from 6 to 30 carbon atoms, the said radical being possibly substituted by at least one substituent -OAlk, Alk representing an alkyl group comprising from 1 to 10 carbon atoms;
- X₁, X₃ and X₄, which may be identical or different, represent, independently of one another, -O- or -NH-;
- X'₂ is selected from the group consisting of: -S-, -CH₂- and a bond; and
- n and m represent, independently of one another, an integer ranging from 1 to 1000, preferably from 1 to 100, and preferentially from 1 to 50;
on the condition that the total number of carbon atoms of the radicals A₁, A₂ and X'₂ is greater than or equal to 8, preferably greater than or equal to 10;
for the preparation of additives in a matrix of polyester, poly(vinyl chloride), polyurethane, polyamide, poly(alkyl acrylate), poly(alkyl methacrylate), polystyrene or polyolefin.

2. The use according to claim 1, in order to enhance the reinforcement against shocks of a matrix of polyester, poly(vinyl chloride), polyurethane, polyamide, poly(alkyl acrylate), poly(alkyl methacrylate), polystyrene or polyolefin, and/or to assist in the nanostructuring of the said matrix, and preferably the matrix is a matrix of poly(lactic acid).

3. The use according to any one of claims 1 or 2, wherein the additives are selected from the group consisting of compounds having the following formulas (II), (III), (IV), (V) and (VI): 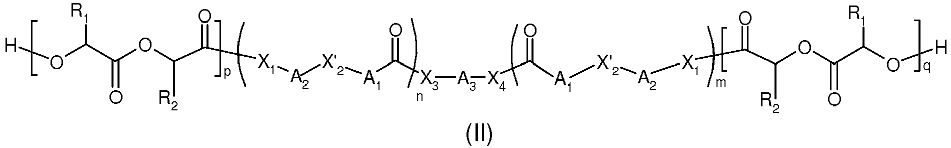 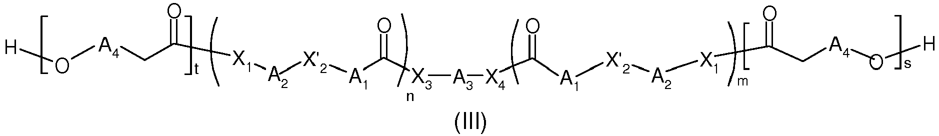 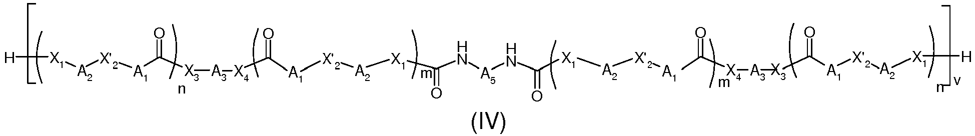 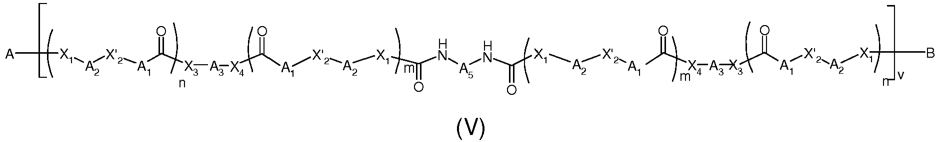 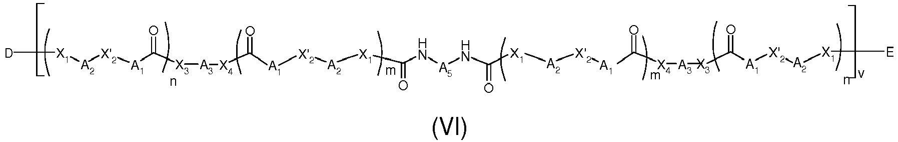 in which:
- X₁, X'₂, X₃, X₄, A₁, A₂, A₃, n and m are as defined in claim 1;
- R₁ and R₂ represent, independently of one another, H or an alkyl group, which is linear or branched, comprising from 1 to 20 carbon atoms, preferably from 1 to 12, and preferentially from 1 to 10, wherein the said alkyl group may possibly comprise at least one double bond or one triple bond;
- A₄ represents a divalent alkylene radical, which is linear or branched, comprising from 1 to 20 carbon atoms, preferably from 2 to 6, the said radical possibly comprising at least one unsaturation;
- A₅ is selected from the group consisting of the radicals:
∘ alkylene, which is linear or branched, comprising from 1 to 20 carbon atoms, preferably from 2 to 12, the said radical possibly comprising at least one unsaturation;
∘ arylene, comprising from 6 to 20 carbon atoms, preferably from 6 to 12, the said arylene radical being possibly substituted;
∘ cycloalkylene, comprising from 3 to 20 carbon atoms, preferably from 5 to 10, the said cycloalkylene radical being possibly substituted;
∘ cycloalkylene-alkylene-cycloalkylene comprising from 6 to 30 carbon atoms; and
∘ alkylene-cycloalkylene comprising from 4 to 15 carbon atoms;
- v represents an integer ranging from 1 to 5000, preferably from 1 to 1000, and preferentially from 2 to 500;
- A and B represent the following radicals: 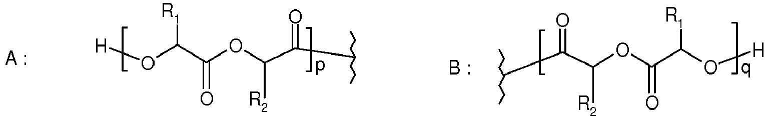
- D and E represent the following radicals: 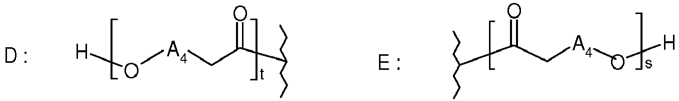
- p and q represent, independently of one another, an integer ranging from 1 to 5000, preferably from 1 to 1000, and preferentially from 2 to 500;
- t and s represent, independently of one another, an integer ranging from 1 to 5000, preferably from 1 to 1000, and preferentially from 2 to 500.

4. Compounds having the following formula (IA): 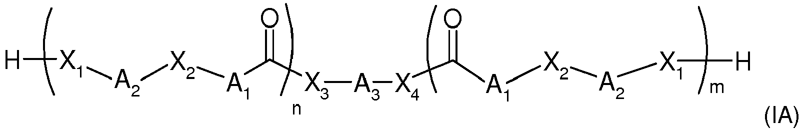 in which:
- X₁, X₃, X₄, A₁, A₂, A₃, n and m are as defined in claim 1;
- X₂ represents -CH₂- or a bond; and
on the condition that the total number of carbon atoms of the radicals A₁, A₂ and X₂ is greater than or equal to 8, preferably greater than or equal to 10;
with the exception of the following compounds:

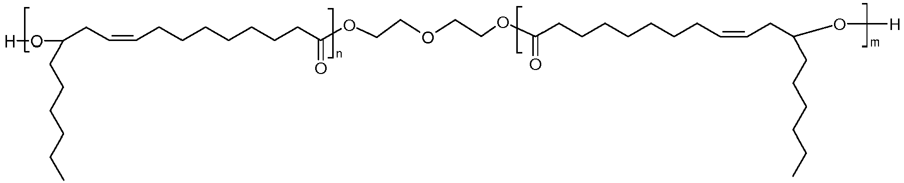

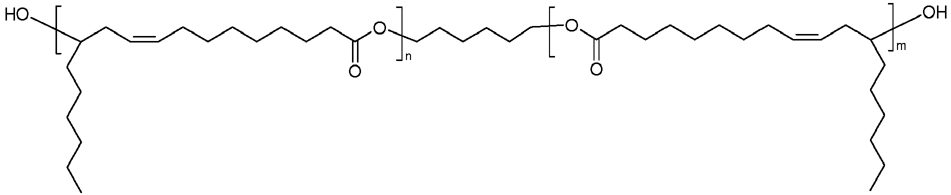

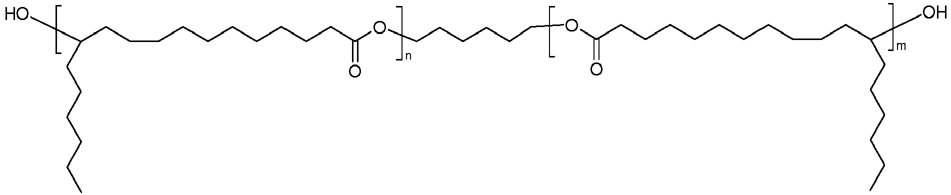

5. A compound having the following formula (II): 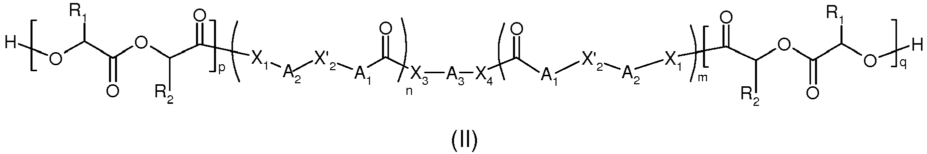 in which::
- X₁, X'₂, X₃, X₄, A₁, A₂, A₃, n and m are as defined in claim 1;
- R₁, R₂, p and q are as defined in claim 3.

6. A compound having the following formula (III): 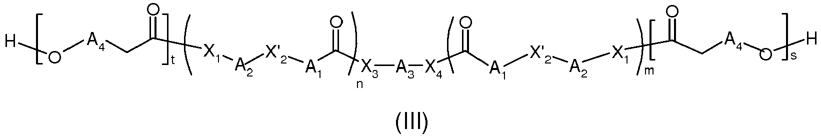 in which:
- X₁, X'₂, X₃, X₄, A₁, A₂, A₃, n and m are as defined in claim 1 ; and
- A₄, t and s are as defined in claim 3.

7. A compound having the following formula (IV): 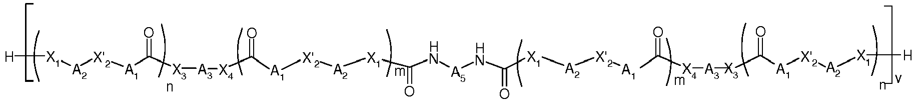 in which::
- X₁, X₃, X₄, X'₂, A₁, A₂, A₃, n, v and m are as defined in claim 1; and
- A₄, A₅ and v are as defined in claim 3.

8. A compound having the following formula (V): 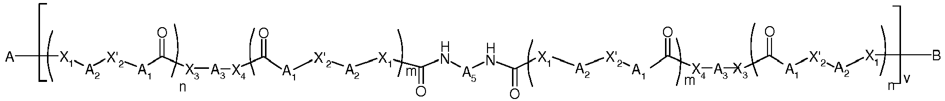 in which::
- X₁, X'₂, X₃, X₄, A₁, A₂, A₃, n and m are as defined in claim 1;
- A, B, A₅, v, p and q are as defined in claim 3.

9. A compound having the following formula (VI): 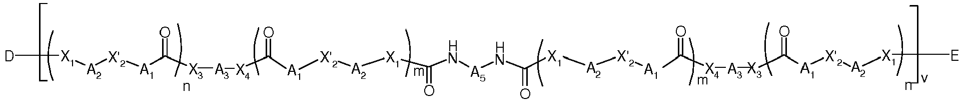 in which::
- X₁, X'₂, X₃, X₄, A₁, A₂, A₃, n, and m are as defined in claim 1;
- D, E, A₅, v, s, t are as defined in claim 3.

10. The use of compounds having the formulas (IV), (V) or (VI) according to any one of claims 7 to 9, for the preparation of adhesives, surfactants, films, thermoplastic elastomers, paints or fibres.

11. A composition comprising a matrix of polyester, poly(vinyl chloride), polyurethane , polyamide, poly(alkyl acrylate), poly(alkyl methacrylate), polystyrene or polyolefin, and at least one compound having the formulas (II), (III), (IV), (V) or (VI) such as defined in claim 3, or mixtures thereof, and possibly at least one other polymer, in particular selected from poly(butadiene), poly(isoprene), poly(ε-caprolactone), poly(tetrahydrofuran) and poly(ricinoleic acid).
